# EUROPÄISCHE PATENTSCHRIFT

(11) **EP 3 653 036 B1**
(45) Veröffentlichungstag und Bekanntmachung des Hinweises auf die Patenterteilung: **20.07.2022**
(21) Anmeldenummer: 19216995.1
(22) Anmeldetag: 27.09.2016
(51) Int. Cl.: A01C 7/08

(54) **VERTEILTURM EINER LANDWIRTSCHAFTLICHEN VERTEILMASCHINE UND VERFAHREN ZUR REIHENABSCHALTUNG AN EINEM DERARTIGEN VERTEILTURM**
DISTRIBUTION HEAD FOR AGRICULTURAL DISTRIBUTION MACHINE AND METHOD FOR ROW DEACTIVATION AT SUCH DISTRIBUTION HEAD
TÊTE DE DISTRIBUTION POUR MACHINE DE DISTRIBUTION AGRICOLE ET PROCÉDÉ DE DÉSACTIVATION DES RANGS D'UNE TELLE TÊTE DE DISTRIBUTION

(30) Priorität: 28.09.2015 DE 102015116378
(43) Veröffentlichungstag der Anmeldung: 20.05.2020
(62) Teilanmeldung aus: 16774915.9
(73) Patentinhaber: Horsch Maschinen GmbH, 92421 Schwandorf (DE)
(72) Erfinder: PIRKENSEER, Michael, 92421 Schwandorf (DE)
(74) Vertreter: v. Bezold & Partner Patentanwälte - PartG mbB

(56) Entgegenhaltungen:
- EP-A1- 0 642 729
- EP-A1- 2 695 508
- EP-A2- 0 799 560
- DE-A1-102013 014 386
- DE-C1- 4 106 711

## Beschreibung

Die vorliegende Erfindung betrifft einen Verteilerturm einer landwirtschaftlichen Verteilmaschine zum Ausbringen von granulatartigem Verteilgut wie Saatgut, Dünger oder dergl. mit den Merkmalen des unabhängigen Anspruchs 1. Die Erfindung betrifft darüber hinaus ein Verfahren zur Einzelreihenabschaltung eines Verteilerturms einer landwirtschaftlichen Verteilmaschine mit den Merkmalen des unabhängigen Anspruchs 16.

In der Landtechnik sind verschiedenste Maschinen zum Ausbringen und Verteilen von landwirtschaftlichen Verteilgütern wie Saatgut, Dünger oder dergl. bekannt. Bei einer bevorzugten Ausführungsform wird das granulatartige Verteilgut in einem Vorratsbehälter der Maschine mitgeführt bzw. bereitgestellt sowie das Verteilgut anschließend mittels verschiedensten Dosiervorrichtungen in einen Luftvolumenstrom, welcher in der Regel von einem Gebläse erzeugt wird, beigemischt, wodurch ein Verteilgut-Luftvolumenstrom entsteht. Dieser Verteilgut-Luftvolumenstrom wird anschließend an einen Verteilerturm weiter befördert. Dem Verteilerturm zugeordnet ist ein in der Regel kreisförmiger Verteilerkopf, an dessen Umfang sich eine Mehrzahl von Abgängen befindet. Im Verteilerkopf wird der eine zentrale Verteilgut-Luftvolumenstrom in eine Mehrzahl von Verteilgut-Teil-Luftvolumenströmen entsprechend der Anzahl an Abgängen bzw. Reihen aufgeteilt. Mittels Saatleitungen wird das Verteilgut zu einer Vielzahl von diesen nachgeordneten Reiheneinheiten bzw. Ausbringvorrichtungen wie Säscharen oder dergl. geleitet. Um eine möglichst gleichmäßige Verteilung des Verteilguts an allen Abgängen bzw. Ausbringeinrichtungen zu erreichen, muss der Verteilerturm bzw. der Verteilerkopf eine möglichst konstante Querverteilung bzw. einen möglichst geringen Variationskoeffizienten an den einzelnen Abgängen aufweisen; d.h. das Verteilgut soll im Verteilerkopf möglichst gleichmäßig über alle Abgänge verteilt werden. In der Regel ist die Querverteilung umso konstanter, je konstanter die Luftvolumenströme, die Drücke sowie die Strömungsgeschwindigkeiten im Verteilerturm, im Verteilerkopf und in den Abgängen sind.

Wird Verteilgut in alle Abgänge bzw. Reihen gefördert und sind die Saatleitungen längenmäßig aufeinander abgestimmt, sind konstante Luftvolumenströme, Drücke und Strömungsgeschwindigkeiten in der Regel gewährleistet. Es kann jedoch erforderlich sein, einzelne Abgänge des Verteilerkopfes abzusperren bzw. in diesen die Verteilgutförderung zu unterbinden, bspw. um sog. Fahrgassen anzulegen oder um eine Überlappung der Verteilgutausbringung mit bereits bearbeiteten Bereichen einer Ackerfläche zu vermeiden. Auch ist es oftmals schwierig, die Länge der Saatleitungen in einer Weise aufeinander abzustimmen, so dass diese in der Praxis mehr oder weniger stark variieren können.

So beschreibt bspw. die DE 10 2005 038 216 A1 einen Verteilerkopf, bei dem jeweils einzelne Abgänge mittels eines Schiebers verschlossen werden können. Durch das Abschalten einzelner Abgänge kann jedoch in den nicht abgeschalteten Abgängen eine zu hohe Strömungsgeschwindigkeit hervorgerufen werden, wodurch die Querverteilung beim Ausbringen des Saatgutes oder Verteilgutes sich verschlechtern kann. Dies könnte zwar durch Verringerung des gesamt Luftvolumenstroms vermieden werden, was jedoch wiederum dazu führen könnte, dass der Luftvolumenstrom im Verteilerturm nicht mehr ausreichend stark ist und das Verteilgut nicht mehr transportiert werden kann bzw. dass der Verteilerturm verstopfen könnte. Das Verteilgut wird in diesem Fall ebenso auf eine geringere Anzahl an Abgängen verteilt, wodurch wiederum nicht mehr die gewünschte Ausbringmenge an den Ausbringvorrichtungen ausgebracht wird, sondern eine erhöhte Menge. Dies könnte zwar ebenfalls durch Verringerung der Menge an Verteilgut verbessert werden. Nur ist eine derartige Steuerung der Maschine in der Regel träge, wodurch ein schnelles und häufiges Ab- und Einschalten von Abgängen bzw. Reihen nicht möglich ist, was aber insbesondere im Zusammenhang mit dem in der Landwirtschaft vermehrt gewünschten Section-Control bzw. einer teilflächenspezifischen Bewirtschaftung nicht zufriedenstellend ist. Ebenso kann sowohl der Luftvolumenstrom als auch die Verteilgutmenge nur bis zu einem gewissen Grad bzw. Anteil verringert werden. Wird der Luftvolumenstrom und die Verteilgutmenge zu weit reduziert, kann wiederum die Querverteilung nicht mehr ausreichend genau sein.

Ein System, bei dem beim Abschalten einzelner Abgänge die Luftvolumenströme im Verteilerturm möglichst unbeeinflusst bleiben sollen, wurde durch die EP 0 799 560 B1 vorgeschlagen. An den jeweiligen Abgängen eines Verteilerkopfes wird jeweils eine Weiche angebracht. Mit Hilfe der Weiche kann der Verteilgut-Luftvolumenstrom entweder in Richtung einer Ausbringvorrichtung oder in Richtung eines Sammlers geleitet werden. Um bei der Umlenkung des Verteilgut-Luftvolumenstroms den Luftvolumenstrom entweichen lassen zu können, ist zwischen der Leitung in Richtung der Ausbringvorrichtung und der Leitung in Richtung des Sammlers ein Bypass angeordnet. Somit soll erreicht werden, dass weder die Verteilgutmenge als auch der Luftvolumenstrom beim Abschalten einzelner Abgänge verringert werden müssen. Das System sieht jedoch eine Rückführung des Verteilguts in den Vorratsbehälter vor, was sich als sehr teileaufwendig herausgestellt hat. Ebenso muss, damit der Luftvolumenstrom bei einer Verteilgutrückführung in den Sammler über den Bypass entweichen kann, in der Leitung in Richtung des Sammlers ein Rückstaudruck vorherrschen. Dieser darf aber wiederum nicht zu groß werden, da sonst Saatgut über den Bypass entweichen kann und nicht in Richtung des Sammlers transportiert wird. Dadurch sind auch in diesem System nach Abschalten einzelner Abgänge keine konstanten Druckniveaus und Luftvolumenströme im Verteilerturm vorhanden, wodurch wiederum die Querverteilung sich verschlechtern kann sowie ein Section Control System auch mit diesem System nicht ausgebildet werden kann.

Ein weiteres System, um einzelne Abgänge an einem Verteilerkopf abzuschalten, wurde durch die EP 0 642 729 A1 bekannt. Der Verteilgut-Luftvolumenstrom kann mittels einer Weiche entweder in Richtung einer Ausbringvorrichtung oder in Richtung eines Steigrohres des Verteilerturms befördert werden, wobei für die Rückführung des Verteilguts in das Steigrohr an diesem eine trichterförmige Aufnahme mit einer Vielzahl von Anschlussstutzen angebracht ist. Zwischen der Weiche und den Anschlussstutzen sind jeweils Schläuche angebracht. Da in dieser Ausführungsform sowohl das Verteilgut als auch der Luftvolumenstrom in das Steigrohr zurückgeführt wird, muss wiederum sowohl die Verteilgutmenge als auch der Luftvolumenstrom verringert werden. Durch diese Verringerung des Luftvolumenstroms entstehen aber wiederum unterschiedliche Drücke im Verteilerturm, wodurch sich die Querverteilung verschlechtert. Eine Möglichkeit der Luftabscheidung, bspw. über einen Bypass wie in der EP 0 799 560 B1, ist in diesem Fall nicht vorhanden.

Eine Weiterbildung der EP 0 642 729 A1 beschreibt die EP 2 695 508 B1. Um die Verteilgutrückführung in das Steigrohr zu vereinfachen, sind die Schläuche durch ein trichterförmiges Element ersetzt worden, welches trichterförmige Element sowohl an den Weichen als auch an das Steigrohr anschließt. Weitere Elemente werden nicht benötigt. Da ebenso in dieser Ausführungsform sowohl das Verteilgut als auch der Luftvolumenstrom in das Steigrohr zurückgeführt werden, muss wiederum sowohl die Verteilgutmenge als auch der Luftvolumenstrom verringert werden. Durch diese Verringerung entstehen wiederum unterschiedliche Drücke im Verteilerturm, wodurch sich die Querverteilung verschlechtert. Eine Möglichkeit der Luftabscheidung, bspw. über einen Bypass wie in der EP 0 799 560 B1 ist auch in diesem Fall nicht vorhanden.

Ebenso ist eine Luftabscheidung an die Umgebung nicht wünschenswert, da hierbei zum einen Luftbeeinträchtigungen und/oder Umweltverschmutzungen entstehen und zum anderen ggf. auch Saatgut an die Umgebung entweichen kann. Ebenso sind hierdurch keine konstanten Druckniveaus im Verteilerturm gewährleistet.

Ein weiteres Problem bei den aus dem Stand der Technik bekannten Verteilertürmen bzw. Verteilmaschinen besteht darin, dass die Querverteilung je nach Länge der angebrachten Saatgutleitungen variieren kann, da sich je nach Saatleitungslänge die Strömungsgeschwindigkeiten in diesen Leitungen ändern. Bislang wurde versucht, diesem Problem durch Verwendung von möglichst gleich langen Saatleitungen entgegenzuwirken, wobei dies insbesondere bei Verteilmaschinen mit großer Arbeitsbreite, bei denen zwischen Verteilerturm und Ausbringvorrichtung ein großer Abstand herrscht, nur schwer bis gar nicht umzusetzen ist.

Somit ist aus dem Stand der Technik eine Vielzahl von Verteilertürmen mit Verteilerköpfen bekannt, an denen jeweils über dessen Umfang verteilt eine Mehrzahl von Abgängen bzw. Reihen angeordnet sind, welche jeweils mittels Weichen abgeschaltet werden können. Die bekannten Verteilertürme weisen jedoch jeweils das Problem auf, dass durch Abschalten einzelner Abgänge und einer Verteilgutrückführung sich jeweils die Druckniveaus, Luftvolumenströme und Strömungsgeschwindigkeiten ändern, wodurch sich die Querverteilung verschlechtert und wodurch nur eine begrenzte Anzahl von Abgängen abgeschaltet werden kann, ohne dabei Verstopfungen des Systems hervorzurufen oder die Querverteilung zu sehr zu verschlechtern.

Der vorliegenden Erfindung liegt daher die Aufgabe zugrunde, einen Verteilerturm einer landwirtschaftlichen Verteilmaschine zum Ausbringen von granulatartigen Verteilgütern zur Verfügung zu stellen, bei welchem ein Abschalten einer beliebigen Anzahl von Abgängen zu keiner merklichen bzw. nur sehr geringen Verschlechterung der Querverteilung führt, welcher verstopfungsunanfällig ist und welcher unabhängig gegenüber äußere Einflüsse, wie verschiedenen Saatleitungslängen ist. Eine weitere Aufgabe der vorliegenden Erfindung wird darin gesehen, ein Verfahren zu einer Reihenabschaltung eines Verteilerturms einer landwirtschaftlichen Verteilmaschine zur Verfügung zu stellen, um somit ein Section Control System zu erreichen.

Diese Aufgaben werden durch einen Verteilerturm mit den Merkmalen im Anspruch 1 sowie durch ein Verfahren zur Einzelreihenabschaltung eines Verteilerturms mit den Merkmalen im Anspruch 16 gelöst. Weitere vorteilhafte Ausgestaltungen und Weiterbildungen der Erfindung sind in den jeweiligen abhängigen Ansprüchen angegeben.

Zur Lösung der genannten Aufgaben schlägt die Erfindung einen Verteilerturm einer landwirtschaftlichen Verteilmaschine zum Ausbringen von granulatartigem Verteilgut wie Saatgut, Dünger oder dergl. vor. Der Verteilerturm weist ein Steigrohr auf, mittels welchem das jeweils auszubringende Verteilgut mit Hilfe eines Luftvolumenstroms in Richtung eines an das Steigrohr anschließenden, vorzugsweise ringförmigen, Verteilerkopfs befördert wird. Das Steigrohr des Verteilerturms weist in aller Regel einen ungefähr vertikalen Verlauf oder leicht gegenüber einer Vertikalen geneigten Verlauf auf und mündet oberseitig im Verteilerkopf, der für eine Verzweigung und Aufteilung des Luft- und Kornvolumenstroms in eine Mehrzahl oder Vielzahl von Abgängen sorgen soll. Der Verteilerkopf weist über seinen Umfang verteilt eine Mehrzahl von Abgängen bzw. Reihen auf, mittels welchen Abgängen der durch das Steigrohr beförderte und im Verteilkopf entsprechend der Anzahl an Abgängen aufgeteilte, Verteilgut-Luftvolumenstrom in Richtung von bspw. im Boden oder bodennah geführten Ausbringeinrichtungen wie Scheibenschare, Zinkenschare oder dergl. befördert wird. Der zunächst das Steigrohr passierende Verteilgut-Luftvolumenstrom wird somit im Verteilerkopf in zahlreiche Verteilgut-Teil-Luftvolumenströme aufgeteilt, wobei die Anzahl der Verteilgut-Teil-Luftvolumenströme der Anzahl von Abgängen bzw. zu vorsorgenden Reihen entspricht. Zumindest einem der Abgänge bzw. einer Reihe ist eine Absperrvorrichtung zugeordnet, wobei diese eine steuerbare Weiche aufweist. Mit dieser steuerbaren Weiche kann der in den Abgängen jeweils vorhandene Verteilgut-Teil-Luftvolumenstrom in Richtung einer Saatleitung oder in Richtung eines Rückführbereichs bzw. einer Rückführeinrichtung umgeleitet werden, wobei der Rückführbereich bzw. die Rückführeinrichtung und die Saatleitung mittels eines Bypasses pneumatisch verbunden sind. Die erwähnte steuerbare Weiche kann unterschiedlich ausgebildet bzw. ausgestaltet sein und etwa als motorisch verstellbare Klappe o. dgl. ausgestaltet sein, wobei die motorische Verstellbarkeit etwa elektromotorisch, pneumatisch oder hydraulisch erfolgen kann. Wahlweise kann die Weiche auch als Kugelhahn o. dgl. ausgebildet sein, so dass der Verteilgut-Teil-Luftvolumenstrom einstellbar und steuerbar wird, und nicht einfach ab- oder zugeschaltet werden muss, sondern wahlweise auch moduliert werden kann.

Der Rückführbereich mündet in einer Rückführeinrichtung, welche das Steigrohr umgibt bzw. Teil dieses ist, wobei das Steigrohr im Bereich der Rückführeinrichtung Öffnungen aufweist, mittels denen das Steigrohr sowie die Rückführeinrichtung pneumatisch verbunden werden. Somit sind erfindungsgemäß das Steigrohr, die Rückführeinrichtung, der Rückführbereich, der Bypass sowie die Saatleitung permanent pneumatisch verbunden, unabhängig der jeweiligen Stellung bzw. Position der Weiche. Dadurch stellt sich bspw. in der Rückführeinrichtung ein Druckniveau P1 sowie im Rückführbereich bzw. im Bypass ein Druckniveau P2 und/oder P3 ein, wobei hierbei P1 kleiner oder gleich zu P2 und/oder P3 ist. Diese Druckniveaus herrschen unabhängig von der Stellung der Weiche sowie unabhängig von der Anzahl an verschlossenen Abgängen, wodurch eine beliebige Anzahl von Abgängen verschlossen werden kann, sowie äußere Einflüsse wie variable Saatleitungslängen oder dergl. keine bzw. vernachlässigbare Auswirkungen auf die Querverteilung der landwirtschaftlichen Verteilmaschine haben.

Um dies noch weiter zu verbessern, können zusätzlich noch weitere Komponenten des Verteilerturms entsprechend dauerhaft pneumatisch mit verbunden werden, wie bspw. der Verteilerkopf, so dass bspw. das Steigrohr, die Rückführeinrichtung, der Rückführbereich, der Bypass, die Saatleitung sowie der Verteilerkopf permanent pneumatisch verbunden sind, unabhängig der jeweiligen Stellung bzw. Position der Weiche.

Der erfindungsgemäße Verteilerturm wird vorzugsweise in landwirtschaftlichen Verteilmaschinen wie bspw. Sämaschinen verwendet. Derartige Maschinen besitzen in der Regel einen trichterförmigen Vorratsbehälter zum Bevorraten und Bereitstellen des auszubringenden Verteilguts. An der tiefsten Position des Vorratsbehälters ist diesem eine Dosiervorrichtung zugeordnet. Mittels dieser Dosiervorrichtung wird das jeweils auszubringende Verteilgut in einer gewünschten Menge in ein mit einem Luftvolumenstrom beaufschlagtes Leitungssystem zu dosiert. Der Luftvolumenstrom wird mit einem Gebläse, bspw. in Form eines Radial- oder eines Zentrifugalgebläses oder dergl. erzeugt. Durch das Beimengen von Verteilgut in den Luftvolumenstrom entsteht somit im Leitungssystem ein Verteilgut-Luftvolumenstrom. Mit Hilfe dieses wird das Verteilgut mit einer Strömungsgeschwindigkeit in Richtung des Verteilerturmes befördert. Der Verteilerturm weist hierbei zunächst bspw. ein weitgehend senkrecht verlaufendes Steigrohr auf, an dessen oberen Ende ein Verteilerkopf mit einer Mehrzahl von an dessen Umfang gleichmäßig angebrachten Abgängen bzw. Reihen anschließt. Im Verteilerkopf erfährt der Verteilgut-Luftvolumenstrom eine Richtungsumkehr aus einer bspw. senkrechten Bewegung, entlang des Steigrohrs in eine waagerechte Bewegung, in Richtung der Abgänge, wodurch der eine Verteilgut-Luftvolumenstrom in eine Mehrzahl von Verteilgut-Teil-Luftvolumenströmen, entsprechend der Anzahl an Abgängen, aufgeteilt wird.

Wenigstens einem der Abgänge kann eine Absperrvorrichtung zu- bzw. nachgeordnet sein. Diese besteht aus zumindest einem Saatleitungsanschluss, an welchem eine Saatleitung angebracht werden kann, mittels derer das Verteilgut in Richtung von bodennah oder im Boden geführten Ausbringeinrichtungen wie Scheibenschare oder Zinkenschare oder dergl. transportiert werden kann. Weiter besitzt die Absperrvorrichtung einen Rückführbereich bspw. in Form eines Rückführanschlusses bzw. einer Rückführöffnung, welcher wiederum mit einer Rückführeinrichtung verbunden ist, mittels welcher Rückführeinrichtung das Verteilgut in das Steigrohr zurück befördert bzw. geleitet wird. Ob das Verteilgut in Richtung der Saatleitung oder in Richtung des Rückführbereichs geleitet wird, kann mit einer, vorzugsweise in der Absperrvorrichtung vorhandenen oder integrierten Weiche gesteuert werden.

Die Absperrvorrichtung kann als separates Teil, welches an die Abgänge des Verteilerkopfs angebracht wird, ausgeführt sein. Ebenso könnte die Absperrvorrichtung bzw. insbesondere die Weiche in den Verteilerkopf integriert sein, wobei die Weiche bspw. als steuerbare Klappe oder auch als Kugelhahn o. dgl. ausgebildet sein kann. Vorzugsweise ist die Weiche motorisch verstellbar bzw. steuerbar. Bei einer derartigen Ausführung könnte bspw. die Bodenfläche des Verteilerkopfs entsprechend der Anzahl an Abgängen bzw. Weichen Rückführöffnungen aufweisen, welche Rückführöffnungen als Rückführbereiche dienen. An die Rückführöffnung könnte bspw. eine Rückführeinrichtung in Form eines Trichters anschließen.

Die Rückführeinrichtung kann auf verschiedenste Weise ausgestaltet sein. So wäre es denkbar, dass diese als Rohr ausgebildet ist, welche das Steigrohr umgibt, wobei das Steigrohr im Bereich der Rückführeinrichtung Öffnungen aufweist, wodurch das Steigrohr sowie die Rückführeinrichtung pneumatisch verbunden sind. Durch die Öffnungen kann darüber hinaus das Verteilgut aus der Rückführeinrichtung zurück zum Steigrohr befördert oder geleitet werden. An der Rückführeinrichtung können darüber hinaus, vorzugsweise entlang des Umfangs eine Mehrzahl von Stutzen angebracht sein, an welchen wiederum Rückleitungen angebracht sind, welche eine Verbindung zwischen dem Rückführbereich und der Rückführeinrichtung herstellen. Darüber hinaus könnte die Rückführeinrichtung trichterförmig gebildet sein, welcher Trichter das Steigrohr umgibt und zum einen im Bereich der Öffnungen im Steigrohr und zum anderen in den Rückführbereich mündet, durch eine derartige Ausgestaltung könnte der Teileaufwand wesentlich reduziert werden.

Es kann vorgesehen sein, dass an den Rückführbereich ein Sammelstück und oder eine Rückleitung und/oder ein trichterförmiges Element anschließen, welche eine Rückführeinrichtung bilden und/oder in diese münden.

Der Rückführbereich kann auf verschiedenste Weise gebildet werden. So kann dieser bspw. als Rückführöffnung, welche bspw. in der Bodenfläche des Verteilerkopfs oder eines der Abgänge bzw. der Absperrvorrichtung angebracht ist, ausgeführt sein. Ebenso kann die Absperrvorrichtung einen Rückführanschluss aufweisen, welcher als Rückführbereich dient. Ebenso könnten der Rückführbereich und die Rückführeinrichtung eine Einheit bilden, insbesondere wenn die Rückführeinrichtung als trichterförmiges Element gebildet ist, welches bspw. mit dessen unterem Ende im Bereich der Öffnungen des Steigrohrs mündet und welches mit dessen oberem Ende im Bereich der Rückführöffnungen des Verteilerkopfs oder der Absperrvorrichtung mündet. An den Rückführbereich könnte jedoch auch mittels eines Rückführanschlusses eine Rückleitung angeschlossen werden, welche in die Rückführeinrichtung mündet. Ebenso könnten mittels eines Sammelstücks zwei oder mehr Rückführbereiche verbunden bzw. gekoppelt werden sowie an das Sammelstück wiederum eine Rückleitung angeschlossen werden.

Das Steigrohr kann darüber hinaus eine Düse aufweisen. Wobei im Bereich dieser Düse der Querschnitt des Steigrohrs zunächst konisch verjüngt und anschließend konisch wieder auf den Ausgangsquerschnitt vergrößert wird. Es kann vorgesehen sein, dass das Steigrohr wenigstens eine Düse aufweist, welcher Düse im Bereich des geringsten Querschnitts Öffnungen zugeordnet sind, welche eine pneumatische Verbindung mit der Rückführeinrichtung herstellen. Es wären jedoch auch andere Bereiche des Steigrohrs vorstellbar. Durch die Düse soll der Verteilgut-Luftvolumenstrom im Steigrohr zunächst zentriert werden, wodurch dieser gleichmäßiger in Richtung des Verteilerkopfs gefördert werden kann. Befinden sich die Öffnungen im Bereich der Düse mit dem geringsten Querschnitt, weist dies weiter den Vorteil auf, dass hierdurch eine Art Injektor Prinzip entsteht, d.h. an den Öffnungen entsteht eine Saugwirkung, wodurch die Saatgutrückführung in das Steigrohr verbessert werden kann. Die Zentrierung des Verteilgut-Luftvolumenstroms kann durch ein der Düse nachgeordnetes sog. Wellrohr noch weiter verbessert werden. Dieses Wellrohr weist über dessen Verlauf bspw. eine Reihe von Querschnittsreduzierungen, bspw. in Form von Vertiefungen oder Wellen mit geringerem Durchmesser, auf. Auch könnte das Steigrohr sich aus wenigstens zwei in Reihe angebrachten Düsen zusammensetzen. Die einzelnen Abschnitte des Wellrohrs können jeweils bspw. mittels Schweißung oder mittels Klemmstücken verbunden werden. Ebenso können die Abschnitte aus einem metallischen oder nicht metallischen Werkstoff gebildet sein. Auch könnte das Steigrohr einteilig und bspw. aus Kunststoff gefertigt sein.

An das Steigrohr schließt ein, vorzugsweise kreisförmiger, Verteilerkopf an. Dieser Verteilerkopf kann bspw. eine pilzkopfförmige Deckelfläche, eine flache Deckelfläche, eine kegelige Deckelfläche oder dergl. aufweisen. Das durch das Steigrohr beförderte Verteilgut wird mittels des Luftvolumenstroms u. a. gegen diese Deckelfläche gefördert und von dieser in Richtung der am Umfang des Verteilerkopfs angebrachten Abgänge bzw. Reihen umgeleitet. Je gleichmäßiger diese Verteilung zwischen den Abgängen ist, desto gleichmäßiger ist die Querverteilung des Verteilguts der landwirtschaftlichen Verteilmaschine. Die Querverteilung ist u. a. von den Strömungsgeschwindigkeiten in den jeweiligen Abgängen abhängig, wobei diese wiederum bspw. von der Länge der angeschlossenen Saatleitungen abhängen sowie von der Stellung der Weiche, d.h. ist diese geschlossen und wird das Verteilgut in Richtung des Rückführbereichs gefördert oder ist diese geöffnet und wird das Verteilgut in Richtung der Saatleitung gefördert. Dies kann sich wiederum auf Basis der Anzahl an geschlossenen Weichen entsprechend verschlechtern. Wird bspw. bei einem Verteilerturm mit 20 Abgängen nur eine Weiche geschlossen, wirkt sich dies nur unmerklich auf die Strömungsgeschwindigkeiten sowie auf die Querverteilung aus. Werden jedoch zwei, drei oder mehr Abgänge geschlossen, tritt eine merkliche Veränderung der Strömungsgeschwindigkeiten ein und somit eine Verschlechterung der Querverteilung. Um dem entgegenzuwirken, werden erfindungsgemäß bei allen Abgängen bzw. bei allen Absperrvorrichtungen jeweils der Rückführbereich, die Rückführeinrichtung sowie der Saatleitungsanschluss permanent pneumatisch verbunden. Dies geschieht vorzugsweise über einen Bypass.

Der Bypass kann auf verschiedenste Art und Weise ausgestaltet werden. Gemäß einer Weiterbildung der Erfindung kann der Bypass z. B. die Weiche Schlitze, Bohrungen oder dergl. Öffnungen aufweisen, mittels denen eine permanente pneumatische Verbindung zwischen dem Rückführbereich und dem Saatleitungsanschluss hergestellt wird. Auch könnten derartige Schlitze, Bohrungen oder dergl. Öffnungen in einer Trennwand zwischen dem Rückführbereich und dem Saatleitungsanschluss angebracht sein. Ebenso könnten derartige Schlitze, Bohrungen oder dergl. Öffnungen in einer Trennwand zwischen bspw. der trichterförmigen Rückführeinrichtung und dem Saatleitungsanschluss angebracht sein. Die Schlitze, Bohrungen oder dergl. Öffnungen sind hierbei jeweils derartig in deren Größe gewählt, dass ein ausreichender Luftvolumenstrom durch die Bypass Öffnungen entweichen kann, Verteilgut jedoch nicht. Auch denkbar wäre es, dass bspw. die Weiche derartig zwischen der geöffneten und geschlossenen Stellung verschwenkt wird, dass jeweils ein gewünschter Luftvolumenstrom über eine sich ergebende Öffnung zwischen der Weiche und dem Gehäuse des Verteilerkopf bzw. der Absperrvorrichtung entweichen kann. Weiter könnte der Bypass als Rohr- oder Schlauchleitung ausgebildet sein.

In einer bevorzugten Ausführungsform ist der Bypass als Luftkanal in die Absperrvorrichtung bzw. den Verteilerkopf integriert. Hierbei kann die Absperrvorrichtung bspw. eine Flanschfläche vorsehen, mittels derer diese an den Abgängen des Verteilerkopfs montiert werden kann. Hierzu können der Flanschfläche, diverse Einrastelemente oder Haken oder dergl. Montageelemente zugeordnet sein. Weiter besitzt die Absperrvorrichtung einen Rückführbereich bspw. in Form eines Rückführanschlusses sowie einen Saatleitungsanschluss, wobei der Rückführbereich sich aus einem Rücklaufkanal und einem Rückführanschluss zusammensetzen kann, welcher bspw. rechtwinkelig an die Flanschfläche anschließt und wobei zwischen Flanschfläche und Saatleitungsanschluss ein Saatgutkanal angeordnet sein kann. Wiederum können diese zwei Kanäle in einem Winkel zueinander angeordnet sein, welcher Winkel bspw. 90° beträgt. Zwischen dem Saatgutkanal und dem Rücklaufkanal ist eine schwenkbare Weiche angeordnet, mittels dieser jeweils der Verteilgut-Luftvolumenstrom zwischen den Kanälen bzw. den Anschlüssen umgeleitet werden kann. Die Flanschfläche, der Rückführanschluss sowie der Saatleitungsanschluss besitzen vorzugsweise einen im Wesentlichen gleichen Aussendurchmesser von bspw. 30mm, wobei diese auch andere Durchmesser aufweisen und zueinander verschieden sein können.

Der Saatgutkanal und der Rücklaufkanal können rechtwinkelig zueinander angeordnet sein, wobei wiederum der Saatgutkanal waagerecht zur Flanschfläche sowie der Rücklaufkanal parallel zur Flanschfläche angeordnet sein könnten. Abschnittsweise parallel zum Saatgutkanal und/oder zum Rücklaufkanal kann sich der Bypass als Luftkanal erstrecken, wodurch der Rückführbereich bzw. der Rückführanschluss sowie der Saatleitungsanschluss pneumatisch verbunden werden.

Der Bypass ist hierbei vorzugsweise derartig angeordnet, dass dieser einen Abscheider bzw. einen Abscheidebereich bspw. in Form eines Umlenkabscheiders bildet. Auch andere Abscheidesysteme wie bspw. ein Zyklonabscheider könnten hierbei verwendet werden. Der Umlenkabscheider weist hierbei vorzugsweise einen Winkel von wenigstens 90° auf, bevorzugt jedoch wenigstens 135°, insbesondere jedoch ca. 180°, auf, wodurch der Luftvolumenstrom anteilig über den Bypass entweichen kann, jedoch ein entweichen von Verteilgut über den Bypass verhindert wird. Der Abscheidegrad muss hierbei möglichst hoch sein, so dass bei geschlossener Weiche das Verteilgut in Richtung des Rückführbereiches zurück in das Steigrohr geleitet wird, wobei der Luftvolumenstrom jedoch über den Bypass in Richtung des Saatleitungsanschlusses entweichen kann. Die Trennung zwischen Verteilgut und einem Anteil des Luftvolumenstroms erfolgt über den Abscheidebereich.

Der Bypass weist unabhängig von der Ausführungsform insbesondere einen Querschnitt auf, der derartig gewählt ist, dass dieser bei geschlossener Weiche einen möglichst gleichen Strömungswiderstand aufweist als die Saatleitung bei geöffneter Weiche. Der Querschnitt bzw. die Breite des Bypasses beträgt bspw. bei der Ausführung als Rohr, Schlauch oder Luftkanal bspw. 30mm oder 25mm oder 20mm. Ebenso werden die bspw. in der Weiche vorhandenen Schlitze und/oder Bohrungen und/oder Öffnungen entsprechend gewählt. Hierdurch wird erreicht, dass jederzeit eine ausreichende Menge an Luftvolumen über den Bypass entweichen kann.

Das Verschwenken der Weiche erfolgt mittels eines elektrischen und/oder pneumatischen und/oder hydraulischen und/oder dergl. Stellantriebes, wobei wiederum die Ansteuerung dieses mittels einer an der Verteilmaschine vorhanden Rechnereinheit erfolgt. Die Rechnereinheit kann bspw. durch manuelle Eingabe durch eine Bedienperson oder auf Basis von GPS-Daten entsprechende Signale an den Stellantrieb übermitteln. Somit könnte bspw. auch ein Section-Control System, bei dem einzelne Abgänge unabhängig voneinander beliebig zu und weg geschaltet werden, bereitgestellt werden, auch wird somit durch die vorliegende Erfindung eine teilflächenspezifische Bewirtschaftung ermöglicht, da ein ab- bzw. zuschalten von beliebig vielen Abgängen keine Auswirkungen mehr auf eine Querverteilung der Verteilmaschine hat. Wobei dies durch geringe Verfahrwege der Weiche bzw. entsprechend schnelle Stellantriebe noch verbessert werden kann. Somit kann mit dem erfindungsgemäßen Verteilerturm eine beliebige Anzahl an Abgängen in einer ausreichenden Geschwindigkeit entsprechend zu- oder abgeschaltet werden, wodurch eine Anwendung von Section-Control bereitgestellt wird. Je nach Stellung der Weiche kann der Verteilgut-Luftvolumenstrom bei geöffneter Position in Richtung des Saatleitungsanschlusses sowie in Richtung einer Ausbringeinrichtung gefördert werden oder bei geschlossener Position über den Rückführbereich und die Rückführeinrichtung in Richtung des Steigrohrs gefördert werden.

Der Absperrvorrichtung, der Saatleitung und/oder dem Rückführbereich kann darüber hinaus ein Sensor bspw. in Form eines Prallsensors oder eines optischen Sensors zugeordnet sein, mittels welchem die Anzahl und/oder die Menge an passierenden Körnern des Verteilguts ermittelt wird. Die Werte des Sensors könnten insbesondere dazu verwendet werden, die Stellung der Weiche entsprechend zu regeln, d.h. ermittelt der Sensor, dass eine gewünschte Menge an Verteilgut überschritten wird, schließt die Weiche bzw. nimmt die Weiche eine Position ein, in der mehr Verteilgut in Richtung des Rückführbereichs geleitet wird und umgekehrt.

Im Verteilerturm sind erfindungsgemäß das Steigrohr, vorzugsweise im Bereich der Düse, die Rückführeinrichtung und der Rückführbereich sowie der Saatleitungsanschluss bzw. die Saatleitung mittels des Bypasses permanent pneumatisch verbunden, unabhängig von der Position der Weiche. Somit stellen sich in der Rückführeinrichtung ein Druckniveau P1, sowie im Bereich des Bypasses bzw. im Bereich des Saatleitungsanschlusses ein Druckniveau P2 und/oder P3 ein, wobei hierbei P1 kleiner oder gleich zu P2 und/oder P3 ist. Diese Druckniveaus herrschen unabhängig von der Position der Weiche, sowie unabhängig von äußeren Einflüssen wie bspw. Saatleitungslängen oder dergl., wodurch die Querverteilung stets weitgehend konstant bleibt und wodurch eine Reihenabschaltung vorzugsweise eine Einzelreihenabschaltung unabhängig der Anzahl geschlossener Abgänge bzw. Weichen realisiert wird.

In einer nicht erfindungsgemäßen des Verteilerturms könnte anstelle einer Absperrvorrichtung eine Druckausgleichsvorrichtung verwendet werden. Diese weist lediglich einen Bypass auf, welcher eine Verbindung zwischen der Rückführeinrichtung und/oder des Steigrohrs und der Saatleitung herstellt. Der Bypass könnte hierbei bspw. als Rohr-, Schlauch oder dergl. ausgebildet sein. Auch somit stellt sich in der Rückführeinrichtung bzw. im Steigrohr ein Druckniveau P1 sowie in der Saatleitung ein Druckniveau P2 und/oder P3 ein, wobei P1 kleiner oder gleich zu P2 und/oder P3 ist.

Eine derartige Druckausgleichsvorrichtung könnte insbesondere in Kombination mit einer oder mehreren Absperrvorrichtungen Verwendung finden, so dass bspw. an einem Verteilerturm nur eine gewisse Anzahl an Abgängen mit Absperrvorrichtungen versehen sind sowie die restlichen mit Druckausgleichsvorrichtungen. Dies hätte den Vorteil, dass der Verteilerturm nach wie vor alle Vorteile der sich einstellenden Druckniveaus und Luftvolumenströme besitzt, jedoch dieser einfacher aufgebaut werden könnte, da nur eine geringe Anzahl an Weichen mit entsprechenden Stellantrieben benötigt werden würde.

Es sei noch angemerkt das die Weiche auf verschiedenste Art und Weise realisiert werden könnte, bspw. als Klappe. Es wären jedoch auch andere Ausgestaltungsarten denkbar, so könnte die Weiche bspw. nach einem Kugelhahnprinzip arbeiten und bspw. als Kugel oder Kegel ausgeführt sein bei dem eine Umlenkung des Verteilgut-Luftvolumenstrom durch Rotation der Kugel bzw. des Kegel erfolgt.

Hinsichtlich der in der vorliegenden Beschreibung und in der Beschreibung von Ausführungsbeispielen gewählten Begrifflichkeit sei angemerkt, dass die vorwiegend verwendete Definition des erfindungsgemäßen Verteilerturmes, der vorzugsweise in landwirtschaftlichen Verteilmaschinen wie bspw. Sämaschinen verwendet wird, nicht implizieren soll, dass nur der Verteilerturm definiert sein soll, und nicht etwa die landwirtschaftliche Verteilmaschine selbst. Die Offenbarung umfasst und definiert in gleicher Weise eine pneumatisch arbeitende Verteilmaschine bzw. Sämaschine mit einem solchen Verteilerturm, wie er im vorliegenden Zusammenhang definiert ist. Wenn daher in der gesamten Beschreibung von einem Verteilerturm - vorzugsweise einsetzbar bei landwirtschaftlichen Verteilmaschinen oder Sämaschinen - die Rede ist, so ist dieser Begriff jederzeit austauschbar gegen den Begriff der landwirtschaftlichen Verteilmaschine, der landwirtschaftlichen Sämaschine und/oder der pneumatisch arbeitenden Verteil- oder Sämschine, die mit einem solchen Verteilerturm ausgestattet ist.

Zur Lösung der genannten Aufgabe schlägt die Erfindung weiter ein Verfahren zur Einzelreihenabschaltung an einem Verteilerturm einer landwirtschaftlichen Verteilmaschine zum Ausbringen von granulatartigem Verteilgut wie Saatgut, Dünger oder dergl. vor. Der Verteilerturm weist ein Steigrohr auf, mittels welchem das jeweils auszubringende Verteilgut mit Hilfe eines Luftvolumenstroms in Richtung eines an das Steigrohr anschließenden vorzugsweise ringförmigen Verteilerkopfes befördert wird. Der Verteilerkopf weist über dessen Umfang verteilt eine Mehrzahl von Abgängen bzw. Reihen auf, mittels welchen Abgängen der durch das Steigrohr beförderte und im Verteilkopf entsprechend der Anzahl an Abgängen aufgeteilte Verteilgut-Luftvolumenstrom in Richtung von bspw. im Boden oder bodennah geführten Ausbringeinrichtungen wie Scheibenschare, Zinkenschare oder dergl. befördert wird. Jedem der Abgänge bzw. jeder Reihe ist eine Absperrvorrichtung zugeordnet. Die Absperrvorrichtung weist eine Weiche auf. Mit dieser Weiche kann der in den Abgängen bzw. Reihen vorhandene Verteilgut-Teil-Luftvolumenstrom in Richtung einer Saatleitung oder in Richtung eines Rückführbereiches umgeleitet werden, wobei der Rückführbereich und/oder die Rückführeinrichtung sowie die Saatleitung mittels eines Bypasses permanent pneumatisch verbunden sind. Der Rückführbereich mündet in einer Rückführeinrichtung, welche das Steigrohr umgibt bzw. Teil dieses ist, wobei das Steigrohr im Bereich der Rückführeinrichtung Öffnungen aufweist, mittels denen das Steigrohr sowie die Rückführeinrichtung pneumatisch verbunden werden. Somit sind erfindungsgemäß das Steigrohr, die Rückführeinrichtung, der Rückführbereich, der Bypass sowie die Saatleitung permanent pneumatisch verbunden, unabhängig von der Stellung der Weiche. Dadurch stellt sich bspw. in der Rückführeinrichtung ein Druckniveau P1 sowie im Bereich des Bypasses ein Druckniveau P2 und/oder P3 ein, wobei hierbei P1 kleiner oder gleich zu P2 und/oder P3 ist. Diese Druckniveaus herrschen unabhängig von der Stellung der Weiche sowie unabhängig von der Anzahl an verschlossenen Abgängen, wodurch erreicht wird, dass eine beliebige Anzahl von Abgängen verschlossen werden kann sowie dass äußere Einflüsse wie Schlauchlängen oder dergl. keine Auswirkung auf die Querverteilung der landwirtschaftlichen Verteilmaschine haben, wodurch eine Einzelreihenabschaltung ermöglicht wird.

Das Verschwenken der Weiche - gebildet bspw. durch eine schwenkbare Klappe oder durch einen Kugelhahn o. dgl. - erfolgt mittels eines elektrischen und/oder pneumatischen und/oder hydraulischen und/oder dergl. Stellantriebes, wobei wiederum die Ansteuerung dieses mittels einer an der Verteilmaschine vorhandenen Rechnereinheit erfolgt. Die Rechnereinheit kann bspw. durch manuelle Eingabe durch eine Bedienperson oder auf Basis von GPS-Daten entsprechende Signale an den Stellantrieb übermitteln. Somit könnte bspw. auch ein Section-Control System, bei dem einzelne Abgänge unabhängig voneinander beliebig zu und weg geschaltet werden, bereitgestellt werden, was durch geringe Verfahrwege der Weiche bzw. entsprechend schnelle Stellantriebe noch verbessert werden kann. Somit kann mit dem erfindungsgemäßen Verteilerturm eine beliebige Anzahl an Abgängen in einer ausreichenden Geschwindigkeit entsprechend zu- oder abgeschaltet werden, wodurch eine Anwendung von Section-Control bereitgestellt wird. Je nach Stellung der Weiche kann der Verteilgut-Luftvolumenstrom bei geöffneter Position in Richtung des Saatleitungsanschlusses sowie in Richtung einer Ausbringeinrichtung gefördert werden oder bei geschlossener Position über den Rückführbereich und die Rückführeinrichtung in Richtung des Steigrohrs.

Der Absperrvorrichtung, der Saatleitung und/oder dem Rückführbereich kann darüber hinaus ein Sensor bspw. in Form eines Prallsensors oder eines optischen Sensors zugeordnet sein, mittels welchem die Anzahl und/oder die Menge an passierenden Körnern des Verteilguts ermittelt wird. Die Werte des Sensors könnten insbesondere dazu verwendet werden, die Stellung der Weiche entsprechend zu regeln, d.h. ermittelt der Sensor, dass eine gewünschte Menge an Verteilgut überschritten wird, schließt die Weiche bzw. nimmt die Weiche eine Position ein, in der mehr Verteilgut in Richtung des Rückführbereichs geleitet wird und umgekehrt.

Im Verteilerturm sind somit das Steigrohr, vorzugsweise im Bereich der Düse, die Rückführeinrichtung und der Rückführbereich, welcher vorzugsweise als Rückleitung und/oder Rückleitungsanschluss und/oder einer Rückführöffnung ausgeführt ist, sowie der Saatleitungsanschluss bzw. die Saatleitung mittels des Bypasses permanent pneumatisch verbunden, unabhängig von der Position der Weiche. Somit stellt sich in der Rückführeinrichtung ein Druckniveau P1, sowie im Bereich des Bypasses bzw. im Bereich des Saatleitungsanschlusses ein Druckniveau P2 und/oder P3 ein, wobei hierbei P1 kleiner oder gleich P2 und/oder P3 ist. Diese Druckniveaus herrschen unabhängig von der Position der Weiche sowie unabhängig von äußeren Einflüssen wie bspw. Saatleitungslängen oder dergl., wodurch die Querverteilung stets weitgehend konstant bleibt und wodurch eine Einzelreihenabschaltung an Abgängen unabhängig der Anzahl an geschlossenen Abgängen bzw. Weichen realisiert wird.

Um die Querverteilung noch weiter zu verbessern, kann in Abhängigkeit der Anzahl an verschlossenen Abgängen jeweils die Menge an von der Dosiervorrichtung in das Leitungssystem dosiertem Verteilgut entsprechend verringert werden, wobei dies erst ab einer gewissen Anzahl von verschlossenen Abgängen, bspw. fünf Abgängen erforderlich sein kann.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische Ansicht einer landwirtschaftlichen Verteilmaschine.
Fig. 2A zeigt eine Perspektivansicht eines Verteilerturms.
Figuren 2B und 2C zeigen in zwei Seitenansichten im Schnitt einen Verteilturm mit verschiedenen Stellungen einer Weiche.
Fig. 3A zeigt eine Perspektivansicht einer weiteren Ausführungsvariante eines Verteilerturms.
Fig. 3B zeigt in einer Seitenansicht im Schnitt eine weitere Ausführungsvariante eines Verteilerturms mit verschiedenen Stellungen einer Weiche.
Figuren 4A und 4B zeigen ein Ausführungsbeispiel einer Absperreinheit mit verschiedenen Stellungen einer Weiche.
Fig. 5 zeigt in einer Seitenansicht im Schnitt eine nicht erfindungsgemäße Ausführungsvariante eines Verteilerturms ohne Weiche.

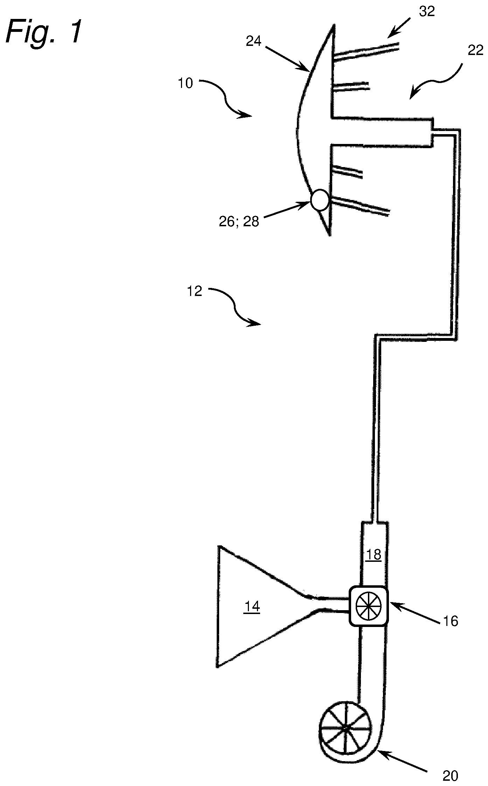

Für gleiche oder gleich wirkende Elemente der Erfindung werden in den Figuren 1 bis 5 jeweils identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

Die Fig. 1 zeigt in einer schematischen Ansicht einen Verteilerturm 10, der in einer landwirtschaftlichen Maschine 12 verbaut ist. Bei dieser Maschine handelt es sich um eine Sämaschine, welche zum Verteilen von granulatartigem Verteilgut wie Saatgut, Dünger oder dergl. Verwendung findet. Die Maschine besitzt einen Vorratsbehälter 14 zum Bevorraten und Bereitstellen des jeweils auszubringenden Verteilgutes. Der Vorratsbehälter 14 ist trichterförmig ausgebildet, wobei diesem an dessen tiefster Position eine Dosiervorrichtung 16 zugeordnet ist. Mittels der Dosiervorrichtung 16 wird das jeweils auszubringende Verteilgut in einer gewünschten Menge in ein mit einem Luftvolumenstrom beaufschlagtes Leitungssystem 18 gleichmäßig zu dosiert. Der Luftvolumenstrom wird mit einem dem Leitungssystem 18 ebenfalls zugeordnetem Gebläse 20 erzeugt. Durch das Beimengen von Verteilgut in den Luftvolumenstrom, entsteht ein Verteilgut-Luftvolumenstrom. Mit Hilfe des Luftvolumenstroms wird das Verteilgut über das Leitungssystem 18 in Richtung des Verteilerturms 10 befördert. Der Verteilerturm 10 weist hierbei zunächst ein senkrecht verlaufendes Steigrohr 22 auf, an dessen oberen Ende ein Verteilerkopf 24 mit einer Mehrzahl von an dessen Umfang gleichmäßig angebrachten Abgängen 26 anschließt. Im Verteilerkopf 24 erfährt der Verteilgut-Luftvolumenstrom zunächst eine Richtungsumkehr aus einer Bewegung entlang des Steigrohrs 22 in eine Bewegung in Richtung der Abgänge 26, wobei hierbei der einzelne zentrale Verteilgut-Luftvolumenstrom in eine Mehrzahl, entsprechend der Anzahl der Abgänge 26, von Verteilgut-Teil-Luftvolumenströmen aufgeteilt wird. Wenigstens einem der Abgänge 26 ist eine hier schematisch dargestellte Absperreinheit 28 mit einer hier nicht dargestellten Weiche 30 zugeordnet. An den Abgängen bzw. Reihen 26 ist jeweils wenigstens eine Saatleitung 32 angeordnet, mittels derer das Verteilgut aus dem Verteilerkopf 24 in Richtung von bodennah oder im Boden geführten hier nicht dargestellten Ausbringeinrichtungen wie Scheibenscharen oder Zinkenscharen oder dergl. transportiert wird.

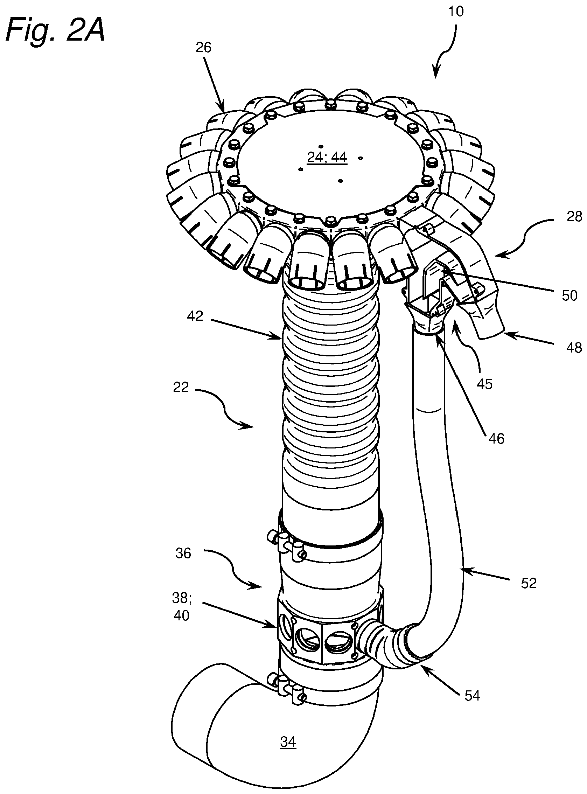

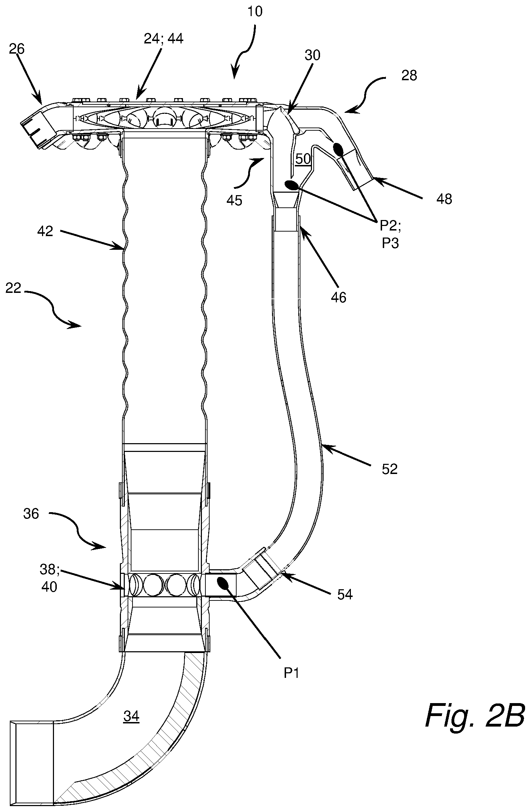

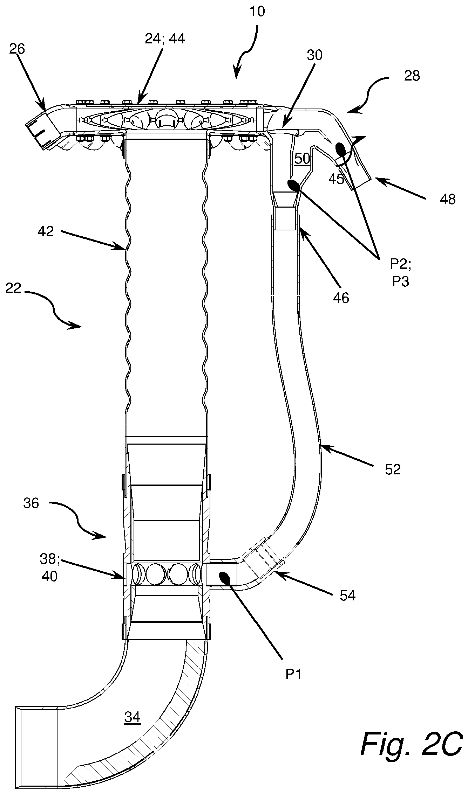

Die Figuren 2A, 2B und 2C zeigen in verschiedenen Ansichten eine Ausführungsvariante eines erfindungsgemäßen Verteilerturms 10, wobei die Fig. 2A diesen in einer Perspektivansicht und die Figuren 2B und 2C diesen in einer Seitenansicht im Schnitt darstellen. Der Verteilerturm 10 besteht im Wesentlichen aus einem Steigrohr 22, an dessen oberem Ende ein Verteilerkopf 24 anschließt. Am Umfang des Verteilerkopfes 24 sind in regelmäßigen Abständen eine Mehrzahl von Abgängen bzw. Reihen 26 angeordnet. Der Verteilerturm 10 weist zunächst ein bogenförmiges Übergangsstück 34 auf. Mittels diesem erfolgt eine Richtungsumkehr des Verteilgut-Luftvolumenstroms aus einer weitgehend waagerechten in eine senkrechte Strömungsrichtung. An das Übergangsstück 34 schließt ein Steigrohr 22 an. Dieses besteht aus verschiedenen Abschnitten. Zunächst besitzt dieses eine Düse 36. Mittels dieser wird der Querschnitt des Steigrohrs 22 zunächst konisch verringert und anschließend wiederum konisch vergrößert. An der Stelle mit dem geringsten Querschnitt befinden sich Rückführeinrichtungen 38 in Form von ringförmigen Öffnungen 40. Mittels der Querschnittsverringerung soll der Verteilgut-Luftvolumenstrom im Steigrohr 22 zentriert werden. Dies soll durch ein an die Düse 36 anschließendes Wellrohr 42 noch weiter verbessert werden. Neben einem Wellrohr 42 wären auch andere Rohre mit Querschnittsverringerungen vorstellbar, bspw. derartige, bei denen Vertiefungen vorhanden sind. Auch wäre es denkbar, dass Wellrohr 42 bspw. durch eine weitere Düse 36 zu ersetzen, so dass das Steigrohr bspw. aus zwei Düsen oder mehr zusammengesetzt ist. Die einzelnen Abschnitte des Steigrohrs 22 können jeweils bspw. mittels Schweißung oder mittels Klemmstücken verbunden werden. Ebenso können die Abschnitte aus einem metallischen oder nicht metallischen Werkstoff gebildet sein. Auch könnte das Steigrohr 22 einteilig und bspw. aus Kunststoff gefertigt sein.

Am oberen Ende des Steigrohrs 22 schließt ein kreisförmiger Verteilerkopf 24 an. Dieser weist im Ausführungsbeispiel der Figuren 2 einen flachen Deckel 44 auf. Der Verteilerkopf 24 könnte jedoch auch verschiedenste andere Formen aufweisen, bspw. pilzförmige oder dergl. Im Verteilerkopf 24 wird der Verteilgut-Luftvolumenstrom aus einer senkrechten in eine waagrechte Richtung in Richtung der Abgänge 26 umgelenkt, wobei hierzu das Verteilgut bspw. gegen den Deckel 44 prallen kann und anschließend durch den Luftvolumenstrom in Richtung der Abgänge 26 geleitet wird. Je gleichmäßiger diese Verteilung zwischen den Abgängen 26 erfolgt, desto gleichmäßiger ist die Querverteilung des Verteilguts an der landwirtschaftlichen Maschine.

Um die Verteilgutabgabe in einzelnen Abgängen 26 abschalten bzw. unterbinden zu können, ist zumindest einem der Abgänge 26 eine Absperrvorrichtung 28 zugeordnet. Innerhalb dieser ist eine schwenkbare Weiche 30 angeordnet. Die Weiche 30 kann hierbei, bspw. mittels eines elektrischen und/oder pneumatischen und/oder hydraulischen und/oder dergl. Stellantriebs zwischen einer geschlossenen Position (vergl. Fig. 2B) und einer geöffneten Position (vergl. Fig. 2C) verschwenkt werden. Die Absperrvorrichtung 28 besitzt neben einer Weiche 30 noch einen Rückführbereich 45 in Form eines Rückführanschlusses 46, einen Saatleitungsanschluss 48 sowie einen Bypass 50. Am Rückführanschluss 46 wird eine Rückleitung 52 angeschlossen, welche mit deren unterem Ende über einen Stutzen 54 in die Rückführeinrichtung 38 mündet.

Wird bspw. die Weiche 30 geschlossen (vergl. Fig. 2B) wird der Verteilgut-Luftvolumenstrom in der Absperrvorrichtung 38 in Richtung des Rückführbereiches 45 umgeleitet und anschließend über eine an einem Rückführanschluss 46 angebrachte Rückleitung 52 und der Rückführeinrichtung 38 wieder in das Steigrohr 22 geleitet. Das rückgeführte Verteilgut wird anschließend wieder vom Verteilgut-Luftvolumenstrom im Steigrohr 22 aufgenommen und wiederum zum Verteilerkopf 24 und zu den Abgängen 26 befördert.

Wenn im Zusammenhang des vorliegend beschriebenen Ausführungsbeispiels auch eine schwenkbare Klappe als Weiche 30 gezeigt ist, so kann die Weiche 30 durchaus auch andere Ausgestaltungen aufweisen. So eignet sich bspw. auch ein Kugelhahn o. dgl. als motorisch verstellbare Weiche 30.

Um auch bei mehreren abgesperrten Weichen 30 noch ein gewünschtes Querverteilungsergebnis zu erreichen, ist es erforderlich, dass trotz dieser in den Komponenten des Verteilerturms 22 jeweils ein zumindest weitgehend gleiches bzw. konstantes Druckniveau bzw. ein weitgehend gleicher bzw. konstanter Luftvolumenstrom, bzw. weitgehend gleiche bzw. konstante Strömungsgeschwindigkeiten unabhängig von der Stellung der Weiche 30, vorherrschen. Um dies zu erreichen, sind das Steigrohr 22, der Verteilerkopf 24, die Rückführeinrichtung 38, der Rückführbereich 45, der Bypass 50, sowie der Saatleitungsanschluss 48 permanent pneumatisch verbunden, unabhängig von der Stellung der Weiche 30. Dies wird insbesondere durch den sich in der Absperrvorrichtung 28 befindlichen Bypass 50 gewährleistet. Somit stellen sich im Verteilerturm 24 diverse Druckniveaus ein, wobei sich in der Rückführeinrichtung 38 ein Druckniveau P1 und in der Absperrvorrichtung 28 bzw. im Bypass 50 ein Druckniveau P2 und/oder P3 ergibt, wobei P1 kleiner oder gleich zu P2 und/oder P3 ist.

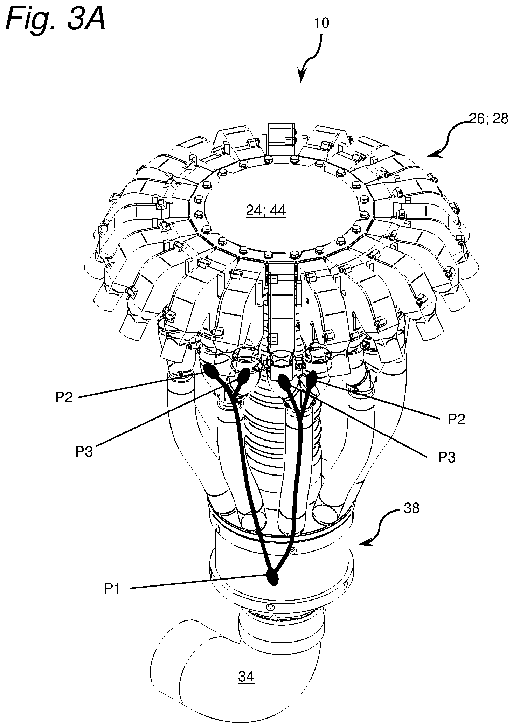

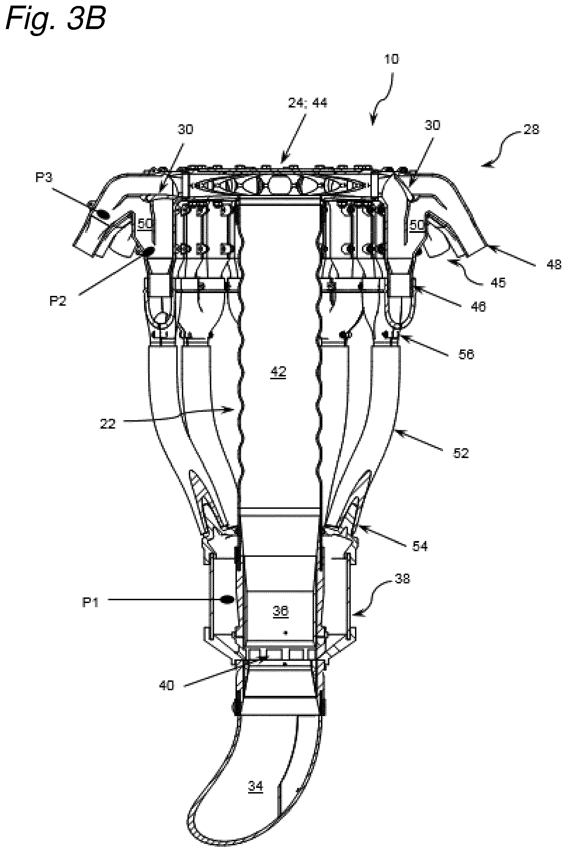

Ein weiteres Ausführungsbeispiel eines Verteilerturms 10 einer landwirtschaftlichen Verteilmaschine zeigen die Figuren 3A und 3B, wobei die Fig. 3A diesen in einer Perspektivansicht und die Fig. 3B diesen in einer Seitenansicht im Schnitt zeigen. Der Verteilerturm 10 besteht im Wesentlichen aus einem Steigrohr 22, an dessen oberen Ende ein Verteilerkopf 24 anschließt. Am Umfang des Verteilerkopfes 24 sind in regelmäßigen Abständen eine Mehrzahl von Abgängen bzw. Reihen 26 angeordnet. Der Verteilerturm 10 weist zunächst ein bogenförmiges Übergangsstück 34 auf, mittels diesem erfolgt eine Richtungsumkehr des Verteilgut-Luftvolumenstroms aus einer weitgehend waagerechten in eine senkrechte Strömungsrichtung. An das Übergangsstück 34 schließt ein Steigrohr 22 an, welches Steigrohr 22 zunächst einen Düsenabschnitt bzw. eine Düse 36 aufweist. Mittels dieser Düse 36 wird der Querschnitt des Steigrohrs 22 konisch verringert und anschließend wieder konisch vergrößert. Mittels der Düse 36 soll der Verteilgut-Luftvolumenstrom im Steigrohr 22 zentriert werden, wodurch eine anschließende gleichmäßige Aufteilung dieses im Verteilerkopf 24 verbessert werden soll. Weiter verbessert werden soll diese Zentrierung nochmals über einen der Düse nachgeordneten im Ausführungsbeispiel als Wellrohr 42 ausgebildeten Rohrabschnitt. Neben einem Wellrohr 42 wären auch andere Rohrabschnitte mit Querschnittsverringerungen vorstellbar, bspw. derartige bei denen nur jeweils einzelne Vertiefungen vorhanden sind. Auch wäre es denkbar, dass Wellrohr 42 bspw. durch eine weitere Düse 36 zu ersetzen, so dass das Steigrohr 22 bspw. aus zwei Düsen oder mehr zusammengesetzt ist. Die einzelnen Abschnitte des Steigrohrs 22 können jeweils bspw. mittels Schweißung oder mittels Klemmstücken verbunden werden. Ebenso können die Abschnitte aus einem metallischen oder nicht metallischen Werkstoff gebildet sein. Auch könnte das Steigrohr 22 einteilig und bspw. aus Kunststoff gefertigt sein.

Am oberen Ende des Steigrohrs 22 schließt ein kreisförmiger Verteilerkopf 24 an, wobei dieser einen flachen Deckel 44 besitzt. Im Verteilerkopf 24 wird der Verteilgut-Luftvolumenstrom aus einer senkrechten in eine waagrechte Richtung, in Richtung der Abgänge 26 umgelenkt, wobei hierzu das Verteilgut bspw. gegen den Deckel 44 prallen kann und anschließend durch den Luftvolumenstrom in Richtung der Abgänge 26 geleitet wird. Je gleichmäßiger diese Verteilung zwischen den Abgängen 26 erfolgt, desto gleichmäßiger ist die Querverteilung des Verteilguts an der landwirtschaftlichen Maschine.

Um die Verteilgutabgabe in einzelnen Abgängen 26 abschalten bzw. unterbinden zu können, ist jedem der Abgänge 26 eine Absperrvorrichtung 28 zugeordnet. Innerhalb dieser ist eine schwenkbare Weiche 30 angeordnet. Die Weiche 30 kann, bspw. mittels eines elektrischen und/oder pneumatischen und/oder hydraulischen und/oder dergl. Stellantriebes zwischen einer geschlossenen Position (vergl. Fig. 3B rechts) und einer geöffneten Position (vergl. Fig. 3B links) verschwenkt werden. Die Absperrvorrichtung 28 besitzt neben einer Weiche 30 noch einen Rückführbereich 45 bestehend aus einem Rückführanschluss 46, einen Saatleitungsanschluss 48 sowie einen Bypass 50. Am Rückführanschluss 46 wird zunächst ein Sammelstück 56 angeschlossen. Dieses ist im Ausführungsbeispiel y-förmig ausgebildet und verbindet jeweils zwei Rückführanschlüsse 46 bzw. zwei Absperrvorrichtungen 28. An das Sammelstück 56 wird darüber hinaus eine Rückleitung 52 angeschlossen, welche mit deren unterem Ende über einen Stutzen 54 in eine Rückführeinrichtung 38 mündet. Mit Hilfe der Sammelstücke 56 kann die Anzahl an Rückleitungen 52 erheblich verringert werden, wobei hier wenigstens zwei aber auch mehr Rückleitungen 52 verbunden werden können.

Die Rückführeinrichtung 38 wird von einem kreisförmigen die Düse 36 bzw. das Steigrohr 22 umgebenden Rohr gebildet, wobei der Düse 36 im Bereich von deren geringsten Umfang eine Vielzahl von rechteckigen Öffnungen 40 zugeordnet sind, welche eine Verbindung zwischen dem Steigrohr 22 bzw. der Düse 36 und der Rückführeinrichtung 38 herstellen. Durch die Anordnung der Öffnungen 40 im Bereich der Düse 36 entsteht an den Öffnungen eine Saugwirkung, wodurch die Saatgutrückführung aus der Rückführeinrichtung 38 in das Steigrohr 22 noch weiter verbessert wird.

Wird die Weiche 30 geschlossen (Fig. 3B rechts), wird der Verteilgut-Luftvolumenstrom in der Absperrvorrichtung 38 in Richtung des Rückführbereiches 45 umgeleitet und mittels des Rückführanschlusses 46, der Sammelstücke 56, der Rückleitung 52 und der Rückführeinrichtung 38 wieder in das Steigrohr 22 geleitet. Das rückgeführte Verteilgut wird anschließend wieder vom Verteilgut-Luftvolumenstrom im Steigrohr 22 zum Verteilerkopf 24 und zu den Abgängen 26 befördert.

Um auch bei wenigstens einer geschlossener Weiche 30 noch ein gewünschtes Querverteilungsergebnis zu erreichen, ist es erforderlich, dass trotz dieser der Druck P1 in der Rückführeinrichtung 38 bzw. am Stutzen 54 kleiner oder gleich dem Druck P2/P3 im Bypass 50 bzw. im Rückführbereich 45 ist.

Um dies zu erreichen, sind das Steigrohr 22, der Verteilerkopf 24, die Rückführeinrichtung 38, der Rückführbereich 45, der Bypass 50, sowie der Saatleitungsanschluss 48 permanent pneumatisch verbunden, unabhängig der Stellung bzw. Position der Weiche 30. Dies wird insbesondere durch den sich in der Absperrvorrichtung 28 befindlichen Bypass 50 gewährleistet. Somit stellen sich im Verteilerturm 24 diverse Druckniveaus ein, wobei sich in der Rückführeinrichtung 38 ein Druckniveau P1 und in der Absperrvorrichtung 28 bzw. im Rückführbereich 45 ein Druckniveau P2 bzw. P3 ergibt, und wobei P1 in Bezug auf P2 und P3 weitgehend kleiner oder gleich ist, unabhängig der Anzahl geschlossener Weichen 30.

Die Druckverbindung im Verteilerturm 10 wird durch die Linien in Fig. 3a nochmals verdeutlicht, in der, dass Steigrohr 22 umgebenden Rückführeinrichtung 38 ein Druckniveau P1 herrscht. Mittels der am Umfang der Rückführeinrichtung 38 angebrachten Stutzen 54, der Rückleitung 52, der Sammelstücke 54, der Rückführanschlüsse 46, sowie des Bypasses 50, herrscht jeweils eine pneumatische Verbindung zwischen diesen Komponenten, wodurch sich in den Absperrvorrichtungen 28 jeweils ein Druckniveau P2 und/oder P3 einstellt. Dieses Druckniveau herrscht insbesondere auch im Bereich des Saatgutleitungsanschlusses 48, wobei hierbei wiederum P1 zu P2 und/oder P3 jeweils weitgehend kleiner oder gleich ist, unabhängig von der Anzahl an geschlossenen Weichen 30 bzw. Abgängen 26. Dadurch wird es ermöglicht, beliebig viele Abgänge 26 am Verteilerturm 10 zu schließen, ohne dass sich die Querverteilung merklich ändert.

Um dies noch zu verbessern, kann in Abhängigkeit der Anzahl an verschlossenen Abgängen 26 jeweils das von der Dosiervorrichtung 16 in das Leitungssystem dosierte Verteilgut entsprechend verringert werden, wobei dies erst ab einer gewissen Anzahl von verschlossenen Abgängen 26, bspw. fünf Abgängen 26 erforderlich ist.

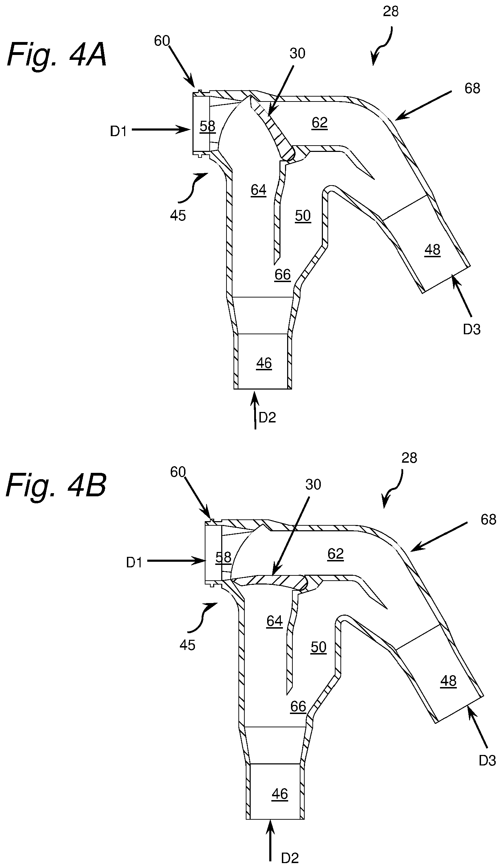

Eine mögliche Ausgestaltung einer Absperrvorrichtung 28 mit integrierter Weiche 30 geht aus den Figuren 4A und 4B hervor, wobei die Weiche 30 in Fig. 4A in geschlossener und in Fig. 4B in geöffneter Position abgebildet ist. Die Absperrvorrichtung 28 besteht aus einer Flanschfläche 58 zur Montage dieser an den jeweiligen Abgängen 26 des Verteilerkopfs 24. Hierzu sind an der Flanschfläche 58 bspw. Einrastelemente 60 vorhanden. Mittels dieser Einrastelemente 60 kann eine einfache und schnelle Montage am Verteilerkopf 24 ermöglicht werden. Die Absperrvorrichtung weist darüber hinaus einen Rückführbereich 45, welcher sich vorzugsweise aus einem Rückführanschluss 46 und einem sich zwischen der Flanschfläche 58 und dem Rückführanschluss 46 erstreckenden Rücklaufkanal 64 zusammensetzt, einen Saatleitungsanschluss 48 und einen sich zwischen der Flanschfläche 58 und dem Saatleitungsanschluss 48 ersteckenden Saatgutkanal 62, auf, wobei sich zwischen dem Rückführanschluss 46 und dem Saatleitungsanschluss 48 darüber hinaus ein Bypass 50 erstreckt. Die Flanschfläche 58, der Rückführanschluss 46 sowie der Saatleitungsanschluss 48 besitzen im Wesentlichen den gleichen Außendurchmesser D1; D2; D3 von bspw. 30mm, wobei diese auch größer oder kleiner gewählt werden könnten und wobei diese auch unterschiedlich zueinander sein könnten.

Nach der Flanschfläche 58 folgt eine Weiche 30, welche zwischen einer geschlossenen Position (vergl. Fig. 4A) und einer geöffneten Position (vergl. Fig. 4B) verschwenkt werden kann. Dieses Verschwenken erfolgt vorzugsweise mittels eines elektrischen und/oder pneumatischen und/oder hydraulischen und/oder dergl. Stellantriebes. Die Ansteuerung des Stellantriebs kann bspw. über eine an der landwirtschaftlichen Maschine vorhandene Rechnereinheit erfolgen. Diese kann wiederum bspw. durch manuelle Eingabe oder auf Basis von GPS Daten entsprechende Signale an den Stellantrieb übermitteln. Je nach Stellung der Weiche 30 kann der Verteilgut-Luftvolumenstrom bei geöffneter Position in Richtung des Saatleitungsanschlusses 48 sowie in Richtung einer Ausbringeinrichtung gefördert werden, oder bei geschlossener Position in Richtung des Rückführanschlusses 46 sowie in Richtung des Steigrohrs 22 gefördert werden.

Der Saatgutkanal 62 und der Rücklaufkanal 64 sind rechtwinkelig zueinander angeordnet, wobei wiederum der Saatgutkanal 62 waagerecht zur Flanschfläche 58 sowie der Rücklaufkanal 64 parallel zur Flanschfläche 58 angeordnet sind. Weiterhin sind im Ausführungsbeispiel der Figuren 4A und 4B der Saatgutkanal 62 und der Rücklaufkanal 64 über die Weiche 30 weitgehend pneumatisch getrennt, wobei dies nicht zwingend erforderlich ist, da auch die Weiche bei entsprechender Ausgestaltung als Bypass dienen kann.

Parallel zum Saatgutkanal 62 sowie zum Rücklaufkanal 64 erstreckt sich ein Bypass 50, welcher den Rückführanschluss 46 sowie den Saatleitungsanschluss 48 pneumatisch verbindet. Der Bypass 50 ist derartig angeordnet, dass dieser einen Abscheider bzw. einen Abscheidebereich 66 in Form eines Umlenkabscheiders bildet. Der Umlenkabscheider weist hierbei einen Winkel von ca. 180° auf, wodurch ein Entweichen von Verteilgut über den Bypass verhindert werden kann. Der Abscheidegrad muss hierbei möglichst hoch sein, so dass bei geschlossener Weiche 30 das Verteilgut in Richtung des Rückführanschlusses 46 zurück in das Steigrohr 22 geleitet wird, und wobei der Luftvolumenstrom jedoch über den Bypass 50 in Richtung des Saatleitungsanschlusses 48 entweichen kann. Die Trennung zwischen Verteilgut und einem Anteil des Luftvolumenstroms erfolgt über den Abscheidebereich 66.

Der Bypass 50 weist einen Querschnitt auf, der derartig gewählt ist, dass dieser bei geschlossener Weiche 30 einen möglichst gleichen Strömungswiderstand aufweist, wie der Saatgutkanal 62 bei geöffneter Weiche 30. Der Querschnitt bzw. die Breite des Bypasses 50 beträgt hierbei bspw. 30mm oder 25mm oder 20mm. Somit ist bspw. der Strömungswiderstand in einem Pfad entlang der Flanschfläche 58, des Rücklaufkanals 64, des Abscheidebereiches 66, dem Bypass 50 und dem Saatleitungsanschluss 48, weitgehend gleich zu einem Strömungswiderstand in einem Pfand entlang der Flanschfläche 58, des Saatgutkanals 62 und dem Saatleitungsanschluss 48.

Die Außenkontur des Saatgutkanals 62 weist darüber hinaus eine Umlenkkontur 68 auf. Mittels dieser erfolgt eine Richtungsänderung des Verteilgut-Luftvolumenstroms aus einer bspw. waagerechten in eine Richtung entlang der Saatleitung. Dieser Umlenkkontur 68 könnte bspw. ein Prallsensor zugeordnet sein, mittels welchem die Anzahl und/oder die Menge an passierenden Körnern des Verteilguts ermittelt wird. Auch könnten hier optische Sensoren vorgesehen sein. In einer bevorzugten Ausführungsform könnte die Stellung der Weiche 30 entsprechend der Werte des Sensors verstellt werden, d.h. ermittelt der Sensor, dass eine gewünschte Menge an Verteilgut überschritten wird, schließt die Weiche 30 bzw. nimmt die Weiche 30 eine Position ein, in der mehr Verteilgut in Richtung des Rückführbereiches 45 geleitet wird und umgekehrt.

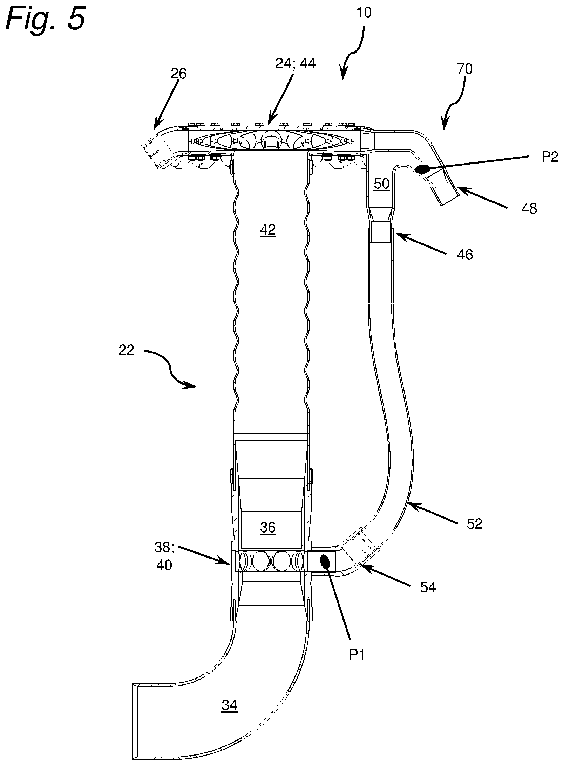

Eine nicht erfindungsgemäße Asführungsvariante eines Verteilerturms 10 zeigt die Fig. 5, wobei diese eine Druckausgleichsvorrichtung 70 aufweist (vergl. Fig. 2). Der Verteilerturm 10 besteht im Wesentlichen aus einem Steigrohr 22, an dessen oberem Ende ein Verteilerkopf 24 anschließt. Am Umfang des Verteilerkopfs 24 ist in regelmäßigen Abständen eine Mehrzahl von Abgängen 26 angeordnet. Der Verteilerturm 10 weist zunächst ein bogenförmiges Übergangsstück 34 auf. Mittels diesem erfolgt eine Richtungsumkehr des Verteilgut-Luftvolumenstroms aus einer weitgehend waagerechten in eine senkrechte Strömungsrichtung. An das Übergangsstück 34 schließt ein Steigrohr 22 an. Dieses besteht aus verschiedenen Abschnitten. Zunächst besitzt dieses eine Düse 36. Mittels dieser wird der Querschnitt des Steigrohrs 22 zunächst konisch verringert und anschließend wiederum konisch vergrößert. An der Stelle mit dem geringsten Querschnitt befinden sich Rückführeinrichtungen 38 in Form von ringförmigen Öffnungen 40. Mittels der Querschnittsverringerung soll der Verteilgut-Luftvolumenstrom im Steigrohr 22 zentriert werden. Dies soll durch ein an die Düse 36 anschließendes Wellrohr 42 noch weiter verbessert werden. Neben einem Wellrohr 42 wären auch andere Rohre mit Querschnittsverringerungen vorstellbar, bspw. derartige bei denen nur jeweils einzelne Vertiefungen vorhanden sind. Auch wäre es denkbar, dass Wellrohr 42 bspw. durch eine weitere Düse 36 zu ersetzen, so dass das Steigrohr 22 bspw. aus zwei Düsen oder mehr zusammengesetzt ist.

Am oberen Ende des Steigrohrs 22 schließt ein kreisförmiger Verteilerkopf 24 an. Dieser weist im Ausführungsbeispiel der Fig. 5 einen flachen Deckel 44 auf. Der Verteilerkopf 24 könnte jedoch auch verschiedenste andere Formen aufweisen, bspw. Pilzförmige oder dergl. Im Verteilerkopf 24 wird der Verteilgut-Luftvolumenstrom aus einer senkrechten in eine waagrechte Richtung in Richtung der Abgänge 26 umgelenkt, wobei hierzu das Verteilgut bspw. gegen den Deckel 44 prallen kann und anschließend durch den Luftvolumenstrom in Richtung der Abgänge 26 geleitet wird. Je gleichmäßiger diese Verteilung zwischen den Abgängen 26 erfolgt, desto gleichmäßiger ist die Querverteilung des Verteilguts der landwirtschaftlichen Maschine.

Um unabhängig von äußeren Einflüssen wie Saatleitungslängen oder dergl. ein gewünschtes Querverteilungsergebnis zu erreichen, ist es erforderlich, in den Komponenten des Verteilerturms 22 jeweils ein zumindest weitgehend gleiches bzw. konstantes Druckniveau bzw. weitgehend gleiche bzw. konstante Luftvolumenströme, bzw. weitgehend gleiche bzw. konstante Strömungsgeschwindigkeiten herzustellen. Um dies zu erreichen, sind das Steigrohr 22, die Rückführeinrichtung 38, der Bypass 50, sowie der Saatleitungsanschluss 48 permanent pneumatisch verbunden. Somit stellen sich im Verteilerturm 24 diverse Druckniveaus ein, wobei sich hierbei In der Rückführeinrichtung 38 ein Druckniveau P1 und in der Druckausgleichsvorrichtung 70 ein Druckniveau P2 und/oder P3 ergeben, und wobei P1 kleiner oder gleich zu P2 und/oder P3 ist.

Die in diesem Ausführungsbeispiel gezeigte Druckausgleichsvorrichtung 70 könnte insbesondere in Verbindung mit den in den Figuren 2 bis 4 gezeigten Absperrvorrichtungen 38 kombiniert werden, so dass bspw. an einem Verteilerturm 10 nur eine geringe Anzahl von Abgängen 26 mit Absperrvorrichtungen 28 versehen sind sowie die restlichen jeweils mit Druckausgleichsvorrichtungen 70. Dies hätte den Vorteil, dass der Verteilerturm 10 nach wie vor alle Vorteile der sich einstellenden Druckniveaus besitzt, jedoch dieser wesentlich einfacher aufgebaut wäre, da nur eine geringe Anzahl von Abgängen mit Weichen 30 und entsprechenden Stellantrieben versehen werden müsste.

Die Erfindung wurde unter Bezugnahme auf eine bevorzugte Ausführungsform beschrieben. Es ist jedoch für den Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 10: Verteilerturm
- 12: landwirtschaftliche Maschine
- 14: Vorratsbehälter
- 16: Dosiervorrichtung
- 18: Leitungssystem
- 20: Gebläse
- 22: Steigrohr
- 24: Verteilerkopf
- 26: Abgang, Reihe
- 28: Absperrvorrichtung
- 30: Weiche
- 32: Saatleitung
- 34: Übergangsstück
- 36: Düse
- 38: Rückführeinrichtung
- 40: Öffnung
- 42: Wellrohr
- 44: Deckel
- 45: Rückführbereich
- 46: Rückführanschluss, Rückführöffnung
- 48: Saatleitungsanschluss
- 50: Bypass
- 52: Rückleitung
- 54: Stutzen
- 56: Sammelstück
- 58: Flanschfläche
- 60: Einrastelement
- 62: Saatgutkanal
- 64: Rücklaufkanal
- 66: Abscheidebereich
- 68: Umlenkkontur
- 70: Druckausgleichsvorrichtung

## Patentansprüche

1. Verteilerturm (10) einer landwirtschaftlichen Verteilmaschine (12) zum Ausbringen von granulatartigem Verteilgut, wie Saatgut, Dünger oder dergl., mit einem Steigrohr (22) zum Zuführen eines Verteilgut-Luftvolumenstroms zu einem an das Steigrohr (22) oberseitig anschließenden ringförmigen Verteilerkopf (24) zur Aufteilung des Verteilgut-Luftvolumenstroms in eine Vielzahl von Verteilgut-Teil-Luftvolumenströmen, entsprechend einer Anzahl von über den Umfang des Verteilerkopfes (24) verteilten Abgängen (26), wobei zumindest einem der Abgänge (26) eine Absperrvorrichtung (28) zugeordnet ist, wobei die Absperrvorrichtung (28) eine Weiche (30) aufweist, mittels derer der jeweilige Verteilgut-Teil-Luftvolumenstrom in Richtung eines der Absperrvorrichtung (28) zugeordneten Saatleitungsanschlusses (48) oder in Richtung eines der Absperrvorrichtung (28) zugeordneten Rückführbereiches (45) geleitet werden kann, wobei an den Rückführbereich (45) eine Rückführeinrichtung (38) anschließt, welche Rückführeinrichtung (38) das Steigrohr (22) umgibt und/oder Teil dieses ist, und wobei das Steigrohr (22) im Bereich der Rückführeinrichtung (38) Öffnungen (40) zur Aufnahme des rückgeführten Verteilguts aufweist, **dadurch gekennzeichnet, dass** das Steigrohr (22), die Rückführeinrichtung (38) und der Rückführbereich (45) sowie der Saatleitungsanschluss (48) unabhängig von der jeweiligen Stellung der Weiche (30) dauerhaft pneumatisch verbunden sind, wobei die Verbindung zwischen dem Rückführbereich (45) und dem Saatleitungsanschluss (48) mittels eines Bypasses (50) erfolgt.

2. Verteilerturm (10) nach Anspruch 1, **dadurch gekennzeichnet, dass** der Rückführbereich (45) einen Rückführanschluss (46) und/oder eine Rückführöffnung und/oder ein trichterförmiges Element aufweist.

3. Verteilerturm (10) nach Anspruch 1, **dadurch gekennzeichnet, dass** an den Rückführbereich (45) ein Sammelstück (56) und oder eine Rückleitung (52) und/oder ein trichterförmiges Element anschließen, welche eine Rückführeinrichtung (38) bilden und/oder in diese münden.

4. Verteilerturm (10) nach einem der vorhergehenden Ansprüche, **dadurch gekennzeichnet, dass** der Weiche (30), Schlitze und/oder Bohrungen und/oder Öffnungen zugeordnet sind, welche als Bypass (50) dienen.

5. Verteilerturm (10) nach einem der Ansprüche 1 bis 3, **dadurch gekennzeichnet, dass** einer Trennwand zwischen dem Rückführbereich (45) und dem Saatleitungsanschluss (48), Schlitze und/oder Bohrungen und/oder Öffnungen zugeordnet sind, welche als Bypass (50) dienen.

6. Verteilerturm (10) nach einem der Ansprüche 1 bis 3, **dadurch gekennzeichnet, dass** der Bypass (50) als Rohr- oder Schlauchleitung ausgebildet ist, oder dass der Bypass (50) als Luftkanal in die Absperrvorrichtung (38) und/oder in den Verteilerkopf (24) integriert ist.

7. Verteilerturm (10) nach einem der vorhergehenden Ansprüche, **dadurch gekennzeichnet, dass** in der Rückführeinrichtung (38) ein Druckniveau P1, sowie im Rückführbereich (45) und/oder im Bypass (50) ein Druckniveau P2 und/oder P3 anliegen, wobei P1 kleiner oder gleich zu P2 und/oder P3 ist.

8. Verteilerturm (10) nach einem der vorhergehenden Ansprüche, **dadurch gekennzeichnet, dass** das Steigrohr (22) wenigstens eine Düse (36) aufweist, welcher Düse (36) im Bereich des geringsten Querschnitts Öffnungen (40) zugeordnet sind, welche eine pneumatische Verbindung mit der Rückführeinrichtung (38) herstellen.

9. Verteilerturm (10) nach einem der vorhergehenden Ansprüche, **dadurch gekennzeichnet, dass** die Absperrvorrichtung (28) sich aus wenigstens einer Flanschfläche (58), einem Rückführbereich (45), welcher sich vorzugsweise aus einem Rückführanschluss (46) und einem zwischen der Flanschfläche (58) und dem Rückführanschluss (46) erstreckenden Rücklaufkanal (64) zusammensetzt, einem Saatleitungsanschluss (48), und einem sich zwischen der Flanschfläche (58) und dem Saatleitungsanschluss (48) ersteckenden Saatgutkanal (62) zusammensetzt und wobei sich zwischen dem Rückführanschluss (46) und dem Saatleitungsanschluss (48) ein Bypass (50) erstreckt.

10. Verteilerturm (10) nach einem der vorhergehenden Ansprüche, **dadurch gekennzeichnet, dass** der Bypass (50) derartig zwischen dem Rückführbereich (45) und dem Saatleitungsanschluss (48) angeordnet ist, dass dieser einen Abscheider (66) bildet, wobei der Luftvolumenstrom hierbei eine Umlenkung erfährt, welche vorzugsweise größer 90°, insbesondere größer 135°, insbesondere jedoch 180° ist.

11. Verteilerturm (10) nach einem der vorhergehenden Ansprüche, **dadurch gekennzeichnet, dass** der Bypass (50) einen Strömungswiderstand aufweist, der weitgehend identisch ist zu einem Strömungswiderstand, der am Saatleitungsanschluss (48) bei geöffneter Position der Weiche (30) vorherrscht.

12. Verteilerturm (10) nach einem der vorhergehenden Ansprüche, **dadurch gekennzeichnet, dass** der Absperrvorrichtung (28) und/oder einer Saatleitung (32) und/oder dem Rückführbereich (45) Sensoren zugeordnet sind, mittels derer die Anzahl und/oder die Menge an passierenden Körnern des Verteilguts ermittelt wird.

13. Verteilerturm (10) nach Anspruch 12, **dadurch gekennzeichnet, dass** die Position der Weiche (30) auf Basis der Anzahl und/oder der Menge an passierenden Körnern des Verteilguts veränderbar ist.

14. Verteilerturm (10) nach einem der vorhergehenden Ansprüche, **dadurch gekennzeichnet, dass** die Absperrvorrichtung (28) und/oder die Weiche (30) und/oder der Rückführbereich (45) in den Verteilerkopf (24) integriert sind.

15. Verteilerturm (10) nach einem der vorhergehenden Ansprüche, **dadurch gekennzeichnet, dass** die Ansteuerung der Weiche (30) mittels einer Rechnereinheit erfolgt, welche Rechnereinheit Signale durch manuelle Eingabe und/oder auf Basis von GPS-Daten an den Stellantrieb übermittelt.

16. Verfahren zur Einzelreihenabschaltung eines Verteilerturms (10) einer landwirtschaftlichen Verteilmaschine (12) zum Ausbringen von granulatartigem Verteilgut, wie Saatgut, Dünger oder dergl., mit einem Steigrohr (22), zum Zuführen des Verteilguts zu einem an das Steigrohr (22) oberseitig anschließenden ringförmigen Verteilerkopf (24) zur Aufteilung des Verteilgut-Luftvolumenstroms in eine Vielzahl von Verteilgut-Teil-Luftvolumenströmen entsprechend einer Anzahl von über den Umfang des Verteilerkopfes (24) verteilten Abgängen oder Reihen (26), wobei jedem dieser Abgänge (26) eine Absperrvorrichtung (28) zugeordnet ist, wobei die Absperrvorrichtung (28) eine Weiche (30) aufweist, mittels derer ein Verteilgut-Luftvolumenstrom in Richtung eines der Absperrvorrichtung (28) zugeordneten Saatleitungsanschlusses (48) oder in Richtung eines der Absperrvorrichtung (28) zugeordneten Rückführbereichs (45) geleitet werden kann, wobei an den Rückführbereich (45) eine Rückführeinrichtung (38) anschließt, wobei die Rückführeinrichtung (38) das Steigrohr (22) umgibt und/oder Teil dieses ist und wobei das Steigrohr (22) im Bereich der Rückführeinrichtung (38) Öffnungen (40) zur Aufnahme des rückgeführten Verteilguts aufweist, **dadurch gekennzeichnet, dass** das Steigrohr (22), die Rückführeinrichtung (38) und der Rückführbereich (45) sowie der Saatleitungsanschluss (48), unabhängig von der Stellung der Weiche (30) dauerhaft pneumatisch verbunden werden, wodurch in der Rückführeinrichtung (38) ein Druckniveau P1, und im Rückführbereich (45) und/oder im Bypass (50) ein Druckniveau P2 und/oder P3 entstehen, wobei P1 kleiner oder gleich zu P2 und/oder P3 ist, wobei die Verbindung zwischen dem Rückführbereich (45) und dem Saatleitungsanschluss (48) mittels eines Bypasses (50) hergestellt wird.

17. Verfahren nach Anspruch 16, **dadurch gekennzeichnet, dass** der Weiche (30), Schlitze und/oder Bohrungen und/oder Öffnungen zugeordnet sind, welche als Bypass (50) dienen, oder dass einer Trennwand zwischen dem Rückführbereich (46) und/oder der Rückführeinrichtung (38) und dem Saatleitungsanschluss (48) Schlitze und/oder Bohrungen und/oder Öffnungen zugeordnet sind, welche als Bypass (50) dienen, oder dass der Bypass (50) als Rohr- oder Schlauchleitung ausgebildet ist, oder dass der Bypass (50) als Luftkanal in die Absperrvorrichtung (28) oder in den Verteilerkopf integriert ist.

18. Verfahren nach einem der Ansprüche 16 bis 17, **dadurch gekennzeichnet, dass** der Absperrvorrichtung (28) und/oder einer Saatleitung (32) und/oder dem Rückführbereich (45) Sensoren zugeordnet sind, mittels derer die Anzahl und/oder die Menge an passierenden Körnern an Verteilgut ermittelt wird.

19. Verfahren nach einem der Ansprüche 16 bis 18, **dadurch gekennzeichnet, dass** die Position der Weiche (30) auf Basis der Anzahl und/oder der Menge an passierenden Körnern des Verteilguts verändert wird.

20. Verfahren nach einem der Ansprüche 16 bis 19, **dadurch gekennzeichnet, dass** die Weiche (30) mittels eines elektrischen und/oder pneumatischen und/oder hydraulischen Stellantriebs verschwenkt wird.

21. Verfahren nach einem der Ansprüche 16 bis 20, **dadurch gekennzeichnet, dass** die Ansteuerung der Weiche (30) mittels einer Rechnereinheit erfolgt, welche Rechnereinheit Signale durch manuelle Eingabe und/oder auf Basis von GPS-Daten an den Stellantrieb übermittelt.

## Claims

1. A distribution tower (10) of an agricultural distribution machine (12) used for the spreading of granular distribution goods, such as seeds, fertilisers, or the like, with a riser pipe (22) for supplying an air volume flow of distribution goods to a ring-formed distributor head (24) connecting at the top to the riser pipe (22), the distributor head (24) serving for dividing the air volume flow of distribution goods into a multitude of partial air volume flows of distribution goods corresponding to a number of outflows (26) distributed over the circumference of the distributor head (24), wherein a shut-off device (28) is assigned to at least one of the outflows (26), wherein the shut-off device (28) has a switch (30) by means of which the particular partial air volume flow of distribution goods can be guided toward a seed tube connection (48) assigned to the shut-off device (28) or toward a return section (45) assigned to the shut-off device (28), wherein a return device (38) connects to the return section (45), which return device (38) surrounds the riser pipe (22) and/or is part thereof, and wherein the riser pipe (22) has openings (40) in the area of the return device (38), the openings (40) serving for receiving the returned distribution goods, **characterized in that** the riser pipe (22), the return device (38), and the return section (45), as well as the seed tube connection (48) are permanently pneumatically connected independently of the particular position of the switch (30), wherein the connection between the return section (45) and the seed tube connection (48) is made by means of a bypass (50).

2. The distribution tower (10) according to claim 1, **characterized in that** the return section (45) has a return connection (46) and/or a return opening and/or a funnelshaped member.

3. The distribution tower (10) according to claim 1, **characterized in that** a collecting piece (56) and/or a return tube (52) and/or a funnel-shaped member connect to the return section (45) and form a return device (38) and/or lead into such return device (38).

4. The distribution tower (10) according to one of the previous claims, **characterized in that** slits and/or holes and/or openings serving as bypass (50) are assigned to the switch (30).

5. The distribution tower (10) according to one of the claims 1 to 3, **characterized in that** slits and/or holes and/or openings serving as bypass (50) are assigned to a partition wall between the return section (45) and the seed tube connection (48).

6. The distribution tower (10) according to one of the claims 1 to 3, **characterized in that** the bypass (50) is designed as pipeline or tubing, or **in that** the bypass (50) is integrated as air channel into the shut-off device (38) and/or into the distributor head (24).

7. The distribution tower (10) according to one of the previous claims, **characterized in that** a pressure level P1 is applied in the return device (38), as well as a pressure level P2 and/or P3 being applied in the return section (45) and/or in the bypass (50), wherein P1 is less than or equal to P2 and/or P3.

8. The distribution tower (10) according to one of the previous claims, **characterized in that** the riser pipe (22) has at least one nozzle (36), which nozzle (36) has openings (40) assigned to it in the area of the smallest cross section, which openings (40) establish a pneumatic connection with the return device (38).

9. The distribution tower (10) according to one of the preceding claims, **characterized in that** the shut-off device (28) is composed of at least a flange surface (58), a return section (45) being preferably composed of a return connection (46) and a return channel (64) extending between the flange surface (58) and the return connection (46), a seed tube connection (48), and a seed channel (62) extending between the flange surface (58) and the seed tube connection (48), and wherein a bypass (50) extends between the return connection (46) and the seed tube connection (48).

10. The distribution tower (10) according to one of the previous claims, **characterized in that** the bypass (50) is disposed between the return section (45) and the seed tube connection (48) in such a manner that said bypass (50) forms a separator (66), wherein the air volume flow undergoes deflection in this context, with the deflection being preferably greater than 90°, in particular greater than 135°, in particular, however, being 180°.

11. The distribution tower (10) according to one of the previous claims, **characterized in that** the bypass (50) has a flow resistance that is essentially identical to a flow resistance that prevails at the seed tube connection (48) when the switch (30) is in an open position.

12. The distribution tower (10) according to one of the previous claims, **characterized in that** sensors are assigned to the shut-off device (28) and/or to a seed tube (32) and/or to the return section (45), with the number and/or the amount of passing grains of the distribution goods being determined by means of said sensors.

13. The distribution tower (10) according to claim 12, **characterized in that** the position of the switch (30) is modifiable based on the number and/or the amount of passing grains of the distribution goods.

14. The distribution tower (10) according to one of the previous claims, **characterized in that** the shut-off device (28) and/or the switch (30) and/or the return section (45) are integrated into the distributor head (24).

15. The distribution tower (10) according to one of the previous claims, **characterized in that** the control of the switch (30) is carried out by means of a computer unit, which computer unit transmits signals by manual input and/or based on GPS data to the actuator.

16. A method for single-row shut-off of a distribution tower (10) of an agricultural distribution machine (12) used for the spreading of granular distribution goods, such as seeds, fertilisers, or the like, with a riser pipe (22) for supplying the distribution goods to a ring-formed distributor head (24) connecting at the top to the riser pipe (22), the distributor head (24) serving for dividing the air volume flow of distribution goods into a multitude of partial air volume flows of distribution goods corresponding to a number of outflows or rows (26) distributed over the circumference of the distributor head (24), wherein a shut-off device (28) is assigned to each of the outflows (26), wherein the shut-off device (28) has a switch (30) by means of which an air volume flow of distribution goods can be guided toward a seed tube connection (48) assigned to the shut-off device (28) or toward a return section (45) assigned to the shut-off device (28), wherein a return device (38) connects to the return section (45), wherein the return device (38) surrounds the riser pipe (22) and/or is part thereof, and wherein the riser pipe (22) has openings (40) in the area of the return device (38), the openings (40) serving for receiving the returned distribution goods, **characterized in that** the riser pipe (22), the return device (38), and the return section (45), as well as the seed tube connection (48) are permanently pneumatically connected, independently of the particular position of the switch (30), whereby a pressure level P1 results in the return device (38), and a pressure level P2 and/or P3 result in the return section (45) and/or in the bypass (50), wherein P1 is less than or equal to P2 and/or P3, wherein the connection between the return section (45) and the seed tube connection (48) is established by means of a bypass (50).

17. The method according to claim 16, **characterized in that** slits and/or holes and/or openings serving as bypass (50) are assigned to the switch (30), or **in that** slits and/or holes and/or openings serving as bypass (50) are assigned to a partition wall between the return section (46) and/or the return device (38) and the seed tube connection (48), or **in that** the bypass (50) is designed as pipeline or tubing, or **in that** the bypass (50) is integrated as air channel into the shut-off device (28) or into the distributor head.

18. The method according to one of the claims 16 to 17, **characterized in that** sensors are assigned to the shut-off device (28) and/or to the seed tube (32) and/or to the return section (45), with the number and/or the amount of passing grains of distribution goods being determined by means of said sensors.

19. The method according to one of the claims 16 to 18, **characterized in that** the position of the switch (30) is modified based on the number and/or the amount of passing grains of the distribution goods.

20. The method according to one of the claims 16 to 19, **characterized in that** the switch (30) is swivelled by means of an electric and/or pneumatic and/or hydraulic actuator.

21. The method according to one of the claims 16 to 20, **characterized in that** the control of the switch (30) is carried out by means of a computer unit, with the computer unit transmitting signals to the actuator by manual input and/or based on GPS data.

## Revendications

1. Tour de distribution (10) d'une machine de distribution agricole (12) pour épandre un produit de distribution du type granulat, tel que des semences, de l'engrais ou similaire, avec un tube ascendant (22) pour amener un flux volumique d'air-de produit de distribution à une tête de distribution (24) annulaire se raccordant côté supérieur au tube ascendant (22) pour la répartition du flux volumique d'air-de produit de distribution en une pluralité de flux volumiques partiels d'air-de produit de distribution, correspondant à un certain nombre de sorties (26) réparties sur la périphérie de la tête de distribution (24), dans laquelle un dispositif obturateur (28) est associé à au moins une des sorties (26), dans laquelle le dispositif obturateur (28) présente un aiguillage (30), au moyen duquel le flux volumique partiel d'air-de produit de distribution respectif peut être guidé en direction d'un raccord de guidage de semences (48) associé au dispositif obturateur (28) ou en direction d'une zone de retour (45) associée au dispositif obturateur (28), dans laquelle un système de retour (38) se raccorde à la zone de retour (45), lequel système de retour (38) entoure le tube ascendant (22) et/ou fait partie de celui-ci, et dans laquelle le tube ascendant (22) présente dans la zone du système de retour (38) des ouvertures (40) pour la réception du produit de distribution retourné, **caractérisée en ce que** le tube ascendant (22), le système de retour (38) et la zone de retour (45) ainsi que le raccord de guidage de semences (48) sont reliés pneumatiquement durablement indépendamment de la position respective de l'aiguillage (30), dans laquelle la liaison entre la zone de retour (45) et le raccord de guidage de semences (48) s'effectue au moyen d'une dérivation (50).

2. Tour de distribution (10) selon la revendication 1, **caractérisée en ce que** la zone de retour (45) présente un raccord de retour (46) et/ou une ouverture de retour et/ou un élément en forme d'entonnoir.

3. Tour de distribution (10) selon la revendication 1, **caractérisée en ce qu'**une pièce de collecte (56) et/ou une conduite de retour (52) et/ou un élément en forme d'entonnoir, lesquels forment un système de retour (38) et/ou débouchent dans celui-ci, se raccordent à la zone de retour (45).

4. Tour de distribution (10) selon l'une quelconque des revendications précédentes, **caractérisée en ce que** des fentes et/ou trous et/ou ouvertures, lesquels servent de dérivation (50), sont associés à l'aiguillage (30) .

5. Tour de distribution (10) selon l'une quelconque des revendications 1 à 3, **caractérisée en ce que** des fentes et/ou trous et/ou ouvertures, lesquels servent de dérivation (50), sont associés à une cloison entre la zone de retour (45) et le raccord de guidage de semences (48) .

6. Tour de distribution (10) selon l'une quelconque des revendications 1 à 3, **caractérisée en ce que** la dérivation (50) est réalisée en tant que conduite tubulaire ou flexible, ou que la dérivation (50) est intégrée en tant que canal d'air dans le dispositif obturateur (38) et/ou dans la tête de distribution (24).

7. Tour de distribution (10) selon l'une quelconque des revendications précédentes, **caractérisée en ce qu'**un niveau de pression P1 règne dans le système de retour (38), ainsi qu'un niveau de pression P2 et/ou P3 dans la zone de retour (45) et/ou dans la dérivation (50), dans laquelle P1 est inférieur ou égal à P2 et/ou P3.

8. Tour de distribution (10) selon l'une quelconque des revendications précédentes, **caractérisée en ce que** le tube ascendant (22) présente au moins une buse (36), buse (36) à laquelle sont associées des ouvertures (40) dans la zone de la section transversale la plus petite, lesquelles établissent une liaison pneumatique avec le système de retour (38).

9. Tour de distribution (10) selon l'une quelconque des revendications précédentes, **caractérisée en ce que** le dispositif obturateur (28) se compose d'au moins une surface à bride (58), d'une zone de retour (45), laquelle se compose de préférence d'un raccord de retour (46) et d'un canal de retour (64) s'étendant entre la surface à bride (58) et le raccord de retour (46), se compose d'un raccord de guidage de semences (48) et d'un canal de semences (62) s'étendant entre la surface à bride (58) et le raccord de guidage de semences (48) et dans laquelle une dérivation (50) s'étend entre le raccord de retour (46) et le raccord de guidage de semences (48).

10. Tour de distribution (10) selon l'une quelconque des revendications précédentes, **caractérisée en ce que** la dérivation (50) est disposée entre la zone de retour (45) et le raccord de guidage de semences (48), de telle sorte que celle-ci forme un séparateur (66), dans laquelle le flux volumique d'air subit ce faisant un changement de direction, lequel est de préférence supérieur à 90°, en particulier supérieur à 135°, mais en particulier de 180°.

11. Tour de distribution (10) selon l'une quelconque des revendications précédentes, **caractérisée en ce que** la dérivation (50) présente une résistance à l'écoulement qui est en grande partie identique à une résistance à l'écoulement qui règne sur le raccord de guidage de semences (48) dans la position ouverte de l'aiguillage (30).

12. Tour de distribution (10) selon l'une quelconque des revendications précédentes, **caractérisée en ce que** des capteurs, au moyen desquels le nombre et/ou la quantité de grains passants du produit de distribution est déterminé(e), sont associés au dispositif obturateur (28) et/ou à une conduite de semences (32) et/ou à la zone de retour (45).

13. Tour de distribution (10) selon la revendication 12, **caractérisée en ce que** la position de l'aiguillage (30) peut être modifiée sur la base du nombre et/ou de la quantité de grains passants du produit de distribution.

14. Tour de distribution (10) selon l'une quelconque des revendications précédentes, **caractérisée en ce que** le dispositif obturateur (28) et/ou l'aiguillage (30) et/ou la zone de retour (45) sont intégrés dans la tête de distribution (24).

15. Tour de distribution (10) selon l'une quelconque des revendications précédentes, **caractérisée en ce que** la commande de l'aiguillage (30) s'effectue au moyen d'une unité de calcul, laquelle unité de calcul transmet des signaux au mécanisme de commande par saisie manuelle et/ou sur la base de données GPS.

16. Procédé pour la désactivation des rangs d'une tour de distribution (10) d'une machine de distribution agricole (12) pour épandre un produit de distribution du type granulat, tel que des semences, de l'engrais ou similaire, avec un tube ascendant (22), pour amener le produit de distribution à une tête de distribution (24) annulaire se raccordant côté supérieur au tube ascendant (22) pour la répartition du flux volumique d'air-de produit de distribution en une pluralité de flux volumiques partiels d'air-de produit de distribution correspondant à un certain nombre de sorties ou rangées (26) réparties sur la périphérie de la tête de distribution (24), dans lequel un dispositif obturateur (28) est associé à chacune de ces sorties (26), dans lequel le dispositif obturateur (28) présente un aiguillage (30), au moyen duquel un flux volumique d'air-de produit de distribution peut être guidé en direction d'un raccord de guidage de semences (48) associé au dispositif obturateur (28) ou en direction d'une zone de retour (45) associée au dispositif obturateur (28), dans lequel un système de retour (38) se raccorde à la zone de retour (45), dans lequel le système de retour (38) entoure le tube ascendant (22) et/ou fait partie de celui-ci et dans lequel le tube ascendant (22) présente dans la zone du système de retour (38) des ouvertures (40) pour la réception du produit de distribution retourné, **caractérisé en ce que** le tube ascendant (22), le système de retour (38) et la zone de retour (45) ainsi que le raccord de guidage de semences (48) sont reliés pneumatiquement durablement indépendamment de la position de l'aiguillage (30), ce qui a pour effet que dans le système de retour (38) un niveau de pression P1, et dans la zone de retour (45) et/ou dans la dérivation (50) un niveau de pression P2 et/ou P3 se produisent, dans lequel P1 est inférieur ou égal à P2 et/ou P3, dans lequel la liaison entre la zone de retour (45) et le raccord de guidage de semences (48) est établie au moyen d'une dérivation (50).

17. Procédé selon la revendication 16, **caractérisé en ce que** des fentes et/ou trous et/ou ouvertures, lesquels servent de dérivation (50), sont associés à l'aiguillage (30), ou que des fentes et/ou trous et/ou ouvertures, lesquels servent de dérivation (50), sont associés à une cloison entre la zone de retour (46) et/ou le système de retour (38) et le raccord de guidage de semences (48), ou que la dérivation (50) est réalisée en tant que conduite tubulaire ou flexible, ou que la dérivation (50) est intégrée en tant que canal d'air dans le dispositif obturateur (28) ou dans la tête de distribution.

18. Procédé selon l'une quelconque des revendications 16 à 17, **caractérisé en ce que** des capteurs, au moyen desquels le nombre et/ou la quantité de grains passants de produit de distribution est déterminé(e), sont associés au dispositif obturateur (28) et/ou à une conduite de semences (32) et/ou à la zone de retour (45).

19. Procédé selon l'une quelconque des revendications 16 à 18, **caractérisé en ce que** la position de l'aiguillage (30) est modifiée sur la base du nombre et/ou de la quantité de grains passants du produit de distribution.

20. Procédé selon l'une quelconque des revendications 16 à 19, **caractérisé en ce que** l'aiguillage (30) est amené à pivoter au moyen d'un mécanisme de commande électrique et/ou pneumatique et/ou hydraulique.

21. Procédé selon l'une quelconque des revendications 16 à 20, **caractérisé en ce que** la commande de l'aiguillage (30) s'effectue au moyen d'une unité de calcul, laquelle unité de calcul transmet des signaux au mécanisme de commande par saisie manuelle et/ou sur la base de données GPS.
